# EUROPEAN PATENT SPECIFICATION

(11) **EP 4 579 306 B1**
(45) Date of publication and mention of the grant of the patent: **02.09.2026**
(21) Application number: 24215106.6
(22) Date of filing: 25.11.2024
(51) Int. Cl.: G02B 9/62, G02B 13/00

(54) **OPTICAL SYSTEM, CAMERA MODULE, AND ELECTRONIC DEVICE**
OPTISCHES SYSTEM, KAMERAMODUL UND ELEKTRONISCHE VORRICHTUNG
SYSTÈME OPTIQUE, MODULE DE CAMÉRA ET DISPOSITIF ÉLECTRONIQUE

(30) Priority: 28.12.2023 CN 202311847623
(43) Date of publication of application: 02.07.2025
(73) Proprietor: Jiangxi OFILM Optical Co., Ltd., Nanchang, Jiangxi 330096 (CN)
(72) Inventor: LIU, Binbin, Shenzhen 518106 (CN); WANG, Xianjie, Nanchang 330096 (CN); WANG, Guogui, Nanchang 330096 (CN); ZHANG, Han, Nanchang 330096 (CN); XU, Biao, Nanchang 330096 (CN)
(74) Representative: Metida

(56) References cited:
- CN-A- 117 215 039
- US-A1- 2013 329 306
- US-A1- 2014 240 852
- US-A1- 2021 396 958
- US-A1- 2022 206 254
- US-B2- 9 335 522

## Description

### FIELD

The subject matter relates to optical imaging, and more particularly, to an optical system, a camera module, and an electronic device.

### BACKGROUND

With increased demand for miniaturization of smart terminals such as mobile phones and tablet computers, new challenges are created for the design of optical systems in the smart terminals.

In order to miniaturize the optical system, a total length of the optical system needs to be reduced. However, there are limitations to miniaturize the optical system by controlling factors such as the refractive powers, the lens thicknesses, and the air intervals. How to further reduce the total length of the optical system to miniaturize the optical system, while also achieving a wide-angle function, is problematic. Conventional optical systems are known from D1 (US 2021/396958A1), D2 (US 9335522B2), D3 (US 2014/240852A1), D4 (CN 117215039A1), D5 (US 2022/206254A1) and D6 (US 2013/329306A1). These conventional systems comprise a first lens, a second lens, a third lens, a fourth lens, a fifth lens and a sixth lens, and have conventional fields of view and arrangement of the first lens.

### SUMMARY

The present application provides an optical system, a camera module, and an electronic device, which may both achieve miniaturization and wide-angle function. The invention is set out in the appended set of claims.

A first aspect of the present application discloses an optical system consisting of six lenses with refractive power. From an object side to an image side along an optical axis of the optical system, the sixth lenses sequentially include a first lens, a second lens, a third lens, a fourth lens, a fifth lens, and a sixth lens. The first lens has positive refractive power, an object side surface of the first lens is convex near the optical axis, and an image side surface of the first lens is concave near the optical axis. The second lens has negative refractive power, and an image side surface of the second lens is concave near the optical axis. The third lens has positive refractive power, and each of an object side surface and an image side surface of the third lens is convex near the optical axis. The fourth lens has negative refractive power, and an object side surface of the fourth lens is concave near the optical axis. The fifth lens has refractive power, and an object side surface of the fifth lens is convex near the optical axis. The sixth lens has refractive power, an object side surface of the sixth lens is convex near the optical axis, and an image side surface of the sixth lens is concave near the optical axis. The optical system satisfies following relationships: 1.7<FNO<2.8, 80deg<FOV<105deg, 1.2<TTL/ImgH<1.4, and 1.2<TTL/f<1.4. Wherein FNO is an F-number of the optical system, FOV is a maximum field of view of the optical system, f is a focal length of the optical system, TTL is a distance from the object side surface of the first lens to an imaging plane of the optical system along the optical axis, and ImgH is an image height corresponding to half of the maximum field of view of the optical system.

A second aspect of the present application provides a camera module including an image sensor and the optical system as described in the first aspect. The image sensor is located at the image side of the optical system. The camera module with the optical system mentioned above may both achieve miniaturization and wide-angle function.

A third aspect of the present application provides an electronic device including a housing and a camera module as described in the second aspect. The camera module is located on the housing. The electronic devices with the camera module mentioned above may both achieve miniaturization and wide-angle function.

In the optical system of the present application, the first lens has positive refractive power, the object side surface of the first lens is convex near the optical axis, and the image side surface of the first lens is concave near the optical axis. Thus, the first lens may facilitate the collection of light beams from a large field of view and reduce the aperture of the optical system. The second lens has negative refractive power, and the image side surface of the second lens is concave near the optical axis. Thus, the second lens may correct the aberration generated by the first lens and improve the imaging quality of the optical system. The third lens has positive refractive power, and each of the object side surface and the image side surface of the third lens is convex near the optical axis. Thus, the third lens may converge the light beams entering the optical system from the first lens and the second lens, allowing the light beams to gently travel in the optical system to reduce the incident angle of the light beams. The fourth lens has negative refractive power, and the object side surface of the fourth lens is concave near the optical axis. Thus, the fourth lens may correct the aberration generated by the preceding lenses (i.e., the first to third lenses), thereby further improving the imaging quality of the optical system. The object side surface of the fifth lens is convex near the optical axis, such that the fifth lens may correct the spherical aberration and astigmatism generated by the first to fourth lenses. The object side surface of the sixth lens is convex near the optical axis, and the image side surface of the sixth lens is concave near the optical axis. Thus, the thickness of the sixth lens at the optical axis may be reduced, thereby reducing the total length of the optical system and controlling the angle of the light beams exiting from the sixth lens.

In addition, when the optical system satisfies the relationships of 1.7<FNO<2.8, 80deg<FOV<105deg, 1.2<TTL/ImgH<1.4, and 1.2<TTL/f<1.4, the total length of the optical system is reduced mainly by controlling the focal length of the optical system. Specifically, when 1.2<TTL/f<1.4 is satisfied, miniaturization of the optical system is achieved by controlling the focal length of the optical system, and wide-angle function is also achieved. When 1.2<TTL/ImgH<1.4 is satisfied, the total optical length of the optical system is reduced, such that the optical system may have ultra-thin characteristics and meet the miniaturization requirements, and the optical system may also have advantages in capturing objects at a medium focal length.

When 1.7<FNO<2.8 is satisfied, the optical system has a large aperture, such that the optical system has a sufficient amount of incoming light beams, which allows the images captured by the optical system to be clear. Thus, the optical system is suitable for capturing images of night scenes, starry sky, and other space scenes with a low brightness.

When 80deg<FOV<105deg is satisfied, the optical system has a large field of view, such that the optical system may have high pixel and high definition characteristics.

### BRIEF DESCRIPTION OF THE DRAWINGS

Implementations of the present technology will now be described, by way of embodiment, with reference to the attached figures. Obviously, the drawings are only some embodiments of the present disclosure. For those ordinary skill in the art, other drawings can be obtained based on these drawings without creative work.
FIG. 1 is a schematic diagram of an optical system according to a first embodiment of the present application;
FIG. 2 shows a longitudinal spherical aberration diagram (mm), an astigmatism diagram (mm), and a distortion diagram (mm) of the optical system of the first embodiment of the present application;
FIG. 3 is a schematic diagram of an optical system according to a second embodiment not falling under the scope of the claimed subject-matter;
FIG. 4 shows a longitudinal spherical aberration diagram (mm), an astigmatism diagram (mm), and a distortion diagram (mm) of the optical system of the second embodiment not falling under the scope of the claimed subject-matter;
FIG. 5 is a schematic diagram of an optical system according to a third embodiment not falling under the scope of the claimed subject-matter;
FIG. 6 shows a longitudinal spherical aberration diagram (mm), an astigmatism diagram (mm), and a distortion diagram (mm) of the optical system of the third embodiment not falling under the scope of the claimed subject-matter;
FIG. 7 is a schematic diagram of an optical system according to a fourth embodiment of the present application;
FIG. 8 shows a longitudinal spherical aberration diagram (mm), an astigmatism diagram (mm), and a distortion diagram (mm) of the optical system of the fourth embodiment of the present application;
FIG. 9 is a schematic diagram of an optical system according to a fifth embodiment of the present application;
FIG. 10 shows a longitudinal spherical aberration diagram (mm), an astigmatism diagram (mm), and a distortion diagram (mm) of the optical system of the fifth embodiment of the present application;
FIG. 11 is a schematic diagram of an optical system according to a sixth embodiment of the present application;
FIG. 12 shows a longitudinal spherical aberration diagram (mm), an astigmatism diagram (mm), and a distortion diagram (mm) of the optical system of the sixth embodiment of the present application;
FIG. 13 is a schematic diagram of an optical system according to a seventh embodiment of the present application;
FIG. 14 shows a longitudinal spherical aberration diagram (mm), an astigmatism diagram (mm), and a distortion diagram (mm) of the optical system of the seventh embodiment of the present application;
FIG. 15 is a schematic diagram of a camera module according to the present application;
FIG. 16 is a schematic diagram of an electronic device according to the present application.

### DETAILED DESCRIPTION

Implementations of the present disclosure will now be described, by way of embodiments, with reference to the above figures. The embodiments are obviously a portion but not all of the embodiments of the present application. Based on the embodiments of the present application, other embodiments obtained by ordinary skill in the art without creative work will still fall within the scope of protection of the present application.

In addition, the terms "first" and "second" are mainly used to distinguish between different devices, components, or portions (the specific types and structures may be the same or different), which are not intended to indicate or imply the relative importance and quantity of the indicated devices, components, or portions. Unless otherwise specified, the term "multiple" means two or more.

Implementations of the present application will now be described, by way of embodiments, with reference to the above figures.

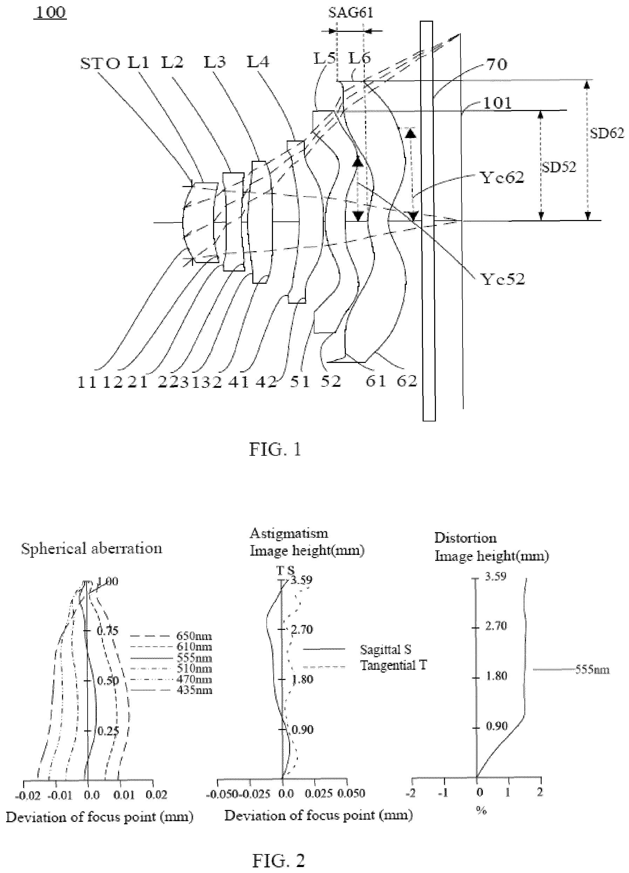

Referring to FIG. 1, a first aspect of the present application provides an optical system 100, which consists of six lenses with refractive power. The optical system 100 includes a first lens L1, a second lens L2, a third lens L3, a fourth lens L4, a fifth lens L5, and a sixth lens L6 sequentially arranged along the optical axis from an object side to an image side of the optical system 100.

The first lens L1 has positive refractive power, the second lens L2 has negative refractive power, the third lens L3 has positive refractive power, the fourth lens L4 has negative refractive power, the fifth lens L5 has negative or positive refractive power, and the sixth lens L6 has negative or positive refractive power. During the imaging process, light beams sequentially enter the first lens L1, the second lens L2, the third lens L3, the fourth lens L4, the fifth lens L5, and the sixth lens L6 from an object side of the first lens L1, and finally form images on an imaging plane 101 of the optical system 100.

Furthermore, an object side surface 11 and an image side 12 of the first lens L1 are convex and concave near the optical axis, respectively. An object side surface 21 of the second lens L2 is convex or concave near the optical axis, and an image side surface 22 of the second lens L2 is concave near the optical axis. An object side surface 31 and an image side surface 32 of the third lens L3 are both convex near the optical axis. An object side surface 41 of the fourth lens L4 is concave near the optical axis, and an image side surface 42 of the fourth lens L4 is concave or convex near the optical axis. An object side surface 51 of the fifth lens L5 is convex near the optical axis, and an image side surface 52 of the fifth lens L5 is concave or convex near the optical axis. An object side surface 61 of the sixth lens L6 is convex near the optical axis, and an image side surface 62 of the sixth lens L6 is concave near the optical axis.

The present application designs the refractive power and surface shape of the six lenses. The first lens L1 has positive refractive power, the object side surface 11 of the first lens L1 is convex near the optical axis, and the image side surface 12 of the first lens L1 is concave near the optical axis. Thus, the first lens L1 may facilitate the collection of light beams from a large field of view and reduce the aperture of the optical system 100. The second lens L2 has negative refractive power, and the image side surface 21 of the second lens L2 is concave near the optical axis. Thus, the second lens L2 may correct the aberration generated by the first lens L1 and improve the imaging quality of the optical system 100. The third lens L3 has positive refractive power, and each of the object side surface 31 and the image side surface 32 of the third lens L3 is convex near the optical axis. Thus, the third lens L3 may converge the light beams entering the optical system 100 from the first lens L1 and the second lens L2, allowing the light beams to gently travel in the optical system 100 to reduce the incident angle of the light beams. The fourth lens L4 has negative refractive power, and the object side surface 41 of the fourth lens L4 is concave near the optical axis. Thus, the fourth lens L4 may correct the aberration generated by the preceding lenses (i.e., the first to third lenses L1, L2 and L3), thereby further improving the imaging quality of the optical system 100. The object side surface 51 of the fifth lens L5 is convex near the optical axis, such that the fifth lens L5 may correct the spherical aberration and astigmatism generated by the first to fourth lenses L1, L2, L3, L4. The object side surface 61 of the sixth lens L6 is convex near the optical axis, and the image side surface 62 of the sixth lens L6 is concave near the optical axis. Thus, a thickness of the sixth lens L6 at the optical axis may be reduced, thereby reducing the total length of the optical system 100 and controlling the angle of the light beams exiting from the sixth lens L6.

In addition, multiple lenses of the six lenses of the optical system 100 are concave-convex lenses, which may reduce the total length of the optical system 100 to facilitate the miniaturization of the optical system 100. The present application provides a preferred solution for the refractive power and surface design of each lens of the optical system 100. In other embodiments, other solutions for the refractive power and surface design of each lens of the optical system 100 may also be used.

In some embodiments, the optical system 100 may be applied to an electronic device such as a smartphone or a tablet computer. Therefore, plastic may be used as the material for the first lens L 1, the second lens L2, the third lens L3, the fourth lens L4, the fifth lens L5, and the sixth lens L6 to reduce the weight of the optical system 100 and facilitate the processing of complex lens surfaces. In other embodiments, when the optical system 100 is applied to an electronic device such as a vehicle-mounted device, a driving recorder, or a vehicle camera, at least one of the first lens L1, the second lens L2, the third lens L3, the fourth lens L4, the fifth lens L5, and the sixth lens L6 may also be made of glass, thereby reducing the temperature sensitivity of the optical system 100 while maintaining good optical performances.

The optical system 100 further includes a stop STO, which may be an aperture stop or a field stop. The stop STO is located between the object side of the optical system 100 and the object side surface 11 of the first lens L1. In other embodiments not falling under the scope of the claimed subject-matter, the stop STO may also be located between two lenses. For example, the stop STO may be located between the fourth lens L4 and the fifth lens L5 according to actual needs.

In some embodiments, the optical system 100 further includes a filter 70 located between the sixth lens L6 and the imaging plane 101 of the optical system 100. Optionally, the filter 70 can be an infrared cutoff filter to filter out infrared beams, thereby improving the imaging quality and allowing the images to fit the visual experience of the human eye. The filter 70 may be made of optical glass having a coating thereon. The filter 70 may also be made of colored glass or other materials according to actual needs. The specific material of the filter 70 is not limited in the embodiment.

The optical system 100 satisfies the following relationship of 1.7<FNO<2.8, wherein FNO is an F-number of the optical system 100. When the relationship is satisfied, the optical system 100 has a large aperture, such that the optical system 100 has a sufficient amount of incoming light beams, which allows the images captured by the optical system 100 to be clear. Thus, the optical system 100 is suitable for capturing images of night scenes, starry sky, and other space scenes with a low brightness. In addition, excessive aberration is prevented from being introduced into the optical system 100, such that the optical system 100 may achieve overall balance. The optical system 100 satisfies the following relationship of 1.9<FNO<2.6, which further improving the imaging quality.

The optical system 100 further satisfies the following relationship of 80deg<FOV<105deg, wherein FOV is a maximum field of view of the optical system 100. When the relationship is satisfied, the optical system 100 has a large field of view, such that the optical system 100 have high pixel and high definition characteristics. The optical system 100 satisfies the following relationship of 85deg<FOV<100deg, such that the optical system 100 may achieve imaging with a large field of view.

In some embodiments, the optical system 100 further satisfies the relationship of 0.9<f123/f<1.7, wherein f123 is a combined focal length of the first lens L1, the second lens L2, and the third lens L3, and f is a focal length of the optical system 100. When the relationship is satisfied, the refractive power of the preceding lens group (i.e., the first lens L1 to the third lens L3) is reasonably allocated. Thus, the preceding lens group may have appropriate refractive power, thereby allowing the light beams to gently travel towards the rear lens group (i.e., the fourth lens L4 to the sixth lens L6) to provide a suitable transmission angle of the light beams in the rear lens group. At the same time, since the refractive power is appropriate, the length of the preceding lenses at the optical axis is controlled. For example, the optical system 100 further satisfies the relationship of 1.1<f123/f<1.5, which is more conducive to controlling the length of the preceding lens group at the optical axis, and making the refractive power more appropriate.

In some embodiments, the optical system 100 further satisfies the relationship of 3<| f456 |/f, wherein f456 is a combined focal length of the fourth lens L4, the fifth lens L5, and the sixth lens L6. When the relationship is satisfied, the refractive power of the rear lens group is reasonably allocated. Thus, the refractive power of the rear lens group is not too weak, thereby allowing the rear lens group to gently diffuse the light beams, and further correcting the aberration generated by the preceding lens group. In addition, since the refractive power is appropriate, the length of the rear lens group at the optical axis is controlled, thereby controlling the total length of the optical system 100. For example, the optical system 100 further satisfies the relationship of 5<| f456 |/f, such that the control effect of the total length of the optical system 100 is improved.

In some embodiments, the optical system 100 further satisfies the following relationship of 1<f1/f<2, wherein f1 is the focal length of the first lens L1. When the relationship is satisfied, a ratio of the focal length of the first lens L1 to the focal length of the optical system 100 is reasonably controlled. Thus, for the entire optical system 100, the refractive power of the first lens L1 is not too strong, thereby avoiding the introduction of excessive spherical aberration and ensuring good imaging quality of the optical system 100. For example, the optical system 100 further satisfies the relationship of 1.1<f1/f<1.8, thereby further improving the imaging quality.

In some embodiments, the optical system 100 further satisfies the following relationship of -5<f2/f<-1.3, wherein f2 is the focal length of the second lens L2. When the relationship is satisfied, a ratio of the focal length of the second lens L2 to the focal length of the optical system 100 is reasonably controlled, and the second lens L2 may also cooperate with the first lens L1 to the correct spherical aberration, thereby improving the imaging quality of the optical system 100. For example, the optical system 100 further satisfies the following relationship of -4<f2/f<-1.5, which further improves the imaging quality.

In some embodiments, the optical system 100 further satisfies the following relationship of 1.3<f3/f<2.4, wherein f3 is the focal length of the third lens L3. When the relationship is satisfied, a ratio of the focal length of the third lens L3 to the focal length of the optical system 100 is reasonably controlled, thereby further correcting the spherical aberration and chromatic aberration, such that the optical system 100 may have improved imaging quality. For example, the optical system 100 further satisfies the following relationship of 1.5<f3/f<2.2, which further improves the imaging quality.

In some embodiments, the optical system 100 further satisfies the following relationship of f4/f<-1.5, wherein f4 is the focal length of the fourth lens L4. When the relationship is satisfied, a ratio of the focal length of the fourth lens L4 to the focal length of the optical system 100 is reasonably controlled. Thus, the fourth lens L4 may gently diffuse the light beams and reduce the burden of the subsequent lenses for correcting the aberration, thereby improving the imaging quality. For example, the optical system 100 further satisfies the following relationship of -7<f4/f<-2, which further improves the imaging quality.

In some embodiments, the optical system 100 further satisfies the following relationship of 1<| f5 |/f, wherein f5 is the focal length of the fifth lens L5. When the relationship is satisfied, a ratio of the focal length of the fifth lens L5 to the focal length of the optical system 100 is reasonably controlled. Thus, for the entire optical system 100, the burden on the sixth lens L6 is reduced, thereby preventing the surface shape of the sixth lens L6 from being too curved, such that the optical system 100 may have good imaging quality. For example, the optical system 100 further satisfies the following relationship of 1<| f5 |/f<12, which further improves the imaging quality.

In some embodiments, the optical system 100 further satisfies the following relationship of 1<| f6 |/f<2.1, wherein f6 is the focal length of the sixth lens L6. When the relationship is satisfied, a ratio of the focal length of the sixth lens L6 to the focal length of the optical system 100 is reasonably controlled. Thus, the refractive power of the sixth lens L6 is moderate, and the sixth lens L6 may cooperate with the fifth lens L5 to correct high-order aberration, thereby improving the imaging quality of the optical system 100. For example, the optical system 100 further satisfies the following relationship of 1<| f6 |/f<1.9, which further improves the imaging quality.

In addition, by controlling the ratio of the refractive power of each lens to the refractive power of the optical system 100, a too curved surface shape of a single lens, which may affect the manufacture and assembly of the optical system 100, is prevented, thereby improving the manufacture and assembly yield of the optical system 100.

In some embodiments, the optical system 100 further satisfies the following relationship of 0.15<| f6 |/(| f1 |+| f2 |)<0.6. When the relationship is satisfied, the refractive power of the first lens L1, the second lens L2, and the sixth lens L6 may match each other to avoid the introduction of excessive on-axis aberration and off-axis aberration, thereby improving the imaging quality of the optical system 100. For example, the optical system 100 further satisfies the following relationship of 0.2<| f6 |/(| f1 |+| f2 |)<0.5, which further improves the imaging quality.

In some embodiments, the optical system 100 further satisfies the following relationship of 2<| f456/f123 |. When the relationship is satisfied, the refractive power of the preceding lens group and the rear lens group may match each other, which is conducive to the transmission of light beams and the balance of aberration, thereby improving the imaging quality of the optical system 100. For example, the optical system 100 further satisfies the following relationship of 2.5<| f456/f123 |, which further improves the imaging quality.

In some embodiments, the optical system 100 further satisfies the following relationship of 0.3<R1/f<0.7, wherein R1 is a radius of curvature of the object side surface 11 of the first lens L1 near the optical axis. When the relationship is satisfied, a ratio of the radius of curvature of the object side surface 11 of the first lens L1 near the optical axis to the focal length of the optical system 100 is reasonably controlled. Thus, the curvature of the first lens L1 is controlled within a reasonable range, thereby reducing the incident angle of light beams on the object side surface **11** of the first lens L 1 and enabling the optical system 100 to have good imaging quality. For example, the optical system 100 further satisfies the following relationship of 0.4<R1/f<0.6, which further improves the imaging quality.

In some embodiments, the optical system 100 further satisfies the following relationship of 0.6<R2/f<1.5, wherein R2 is a radius of curvature of the image side surface 12 of the first lens L1 near the optical axis. When the relationship is satisfied, a ratio of the radius of curvature of the image side surface 12 of the first lens L1 near the optical axis to the focal length of the optical system 100 is reasonably controlled. Thus, the object side surface 11 and the image side surface 12 of the first lens L1 may cooperate with each other to quickly converge the light beams, thereby reducing the aperture of the head of the optical system 100 to achieve miniaturization. For example, the optical system 100 further satisfies the following relationship of 0.8<R2/f<1.3, which is more conducive to the miniaturization of the head of the optical system 100.

In some embodiments, the optical system 100 further satisfies the following relationship of 0.9<| R3 |/f, wherein R3 is a radius of curvature of the object side surface 21 of the second lens L2 near the optical axis. When the relationship is satisfied, a ratio of the radius of curvature of the object side surface 21 of the second lens L2 at the optical axis to the focal length of the optical system 100 is reasonably controlled. Thus, the travelling distance of the light beams in a small aperture is extended, which is more conducive to the miniaturization of the head of the optical system 100. For example, the optical system 100 further satisfies the following relationship of 1<| R3 |/f, which is more conducive to the miniaturization of the head of the optical system 100.

In some embodiments, the optical system 100 further satisfies the following relationship of 0.5<R4/f<2.1, wherein R4 is a radius of curvature of the image side surface 22 of the second lens L2 near the optical axis. When the relationship is satisfied, a ratio of the radius of curvature of the image side surface 22of the second lens L2 at the optical axis to the focal length of the optical system 100 is reasonably controlled. Thus, the light beams may be gently diffused towards the image side of the second lens L2, thereby avoiding the introduction of a large off-axis chromatic aberration and thus improving the imaging quality. For example, the optical system 100 further satisfies the following relationship of 0.7<R4/f<1.9, which further improves the imaging quality.

In some embodiments, the optical system 100 further satisfies the following relationship of 0.9<| RS |/f, wherein R5 is a radius of curvature of the object side surface 31 of the third lens L3 near the optical axis. When the relationship is satisfied, a ratio of the radius of curvature of the object side surface 31 of the third lens L3 at the optical axis to the focal length of the optical system 100 is reasonably controlled. Thus, the astigmatism of the third lens L3 is controlled within a reasonable range, thereby balancing the astigmatism and improving the imaging quality of the optical system 100. For example, the optical system 100 further satisfies the following relationship of 1<| R5 |/f, which further improves the imaging quality.

In some embodiments, the optical system 100 further satisfies the following relationship of R6/f<-0.7, wherein R6 is a radius of curvature of the image side surface 32 of the third lens L3 near the optical axis. When the relationship is satisfied, the surface shapes of the object side surface 31 and image side surface 32 of the third lens L3 match each other. Introduction of on-axis aberration is avoided, flexible design of aspherical surfaces is achieved, and off-axis aberration is balanced, thereby improving the imaging quality of the optical system 100. For example, the optical system 100 further satisfies the following relationship of -9<R6/f<-0.9, which further improves the imaging quality.

In some embodiments, the optical system 100 further satisfies the following relationship of R7/f<-0.6, wherein R7 is a radius of curvature of the object side surface 41 of the fourth lens L4 near the optical axis. When the relationship is satisfied, a ratio of the radius of curvature of the object side surface 41 of the fourth lens L4 near the optical axis to the focal length of the optical system 100 is reasonably controlled. Thus, the astigmatism of the fourth lens L4 is within a reasonable range, and the incident angle of the light beams on the object side surface 41 of the fourth lens L4 is reduced, thereby improving the imaging quality of the optical system 100 have good imaging quality. For example, the optical system 100 further satisfies the following relationship of -4<R7/f<-0.8, which further improves the imaging quality.

In some embodiments, the optical system 100 further satisfies the following relationship of 1<| R8 |/f, wherein R8 is a radius of curvature of the image side surface 42 of the fourth lens L4 near the optical axis. When the relationship is satisfied, a ratio of the radius of curvature of the image side surface 42 of the fourth lens L4 near the optical axis to the focal length of the optical system 100 is reasonably controlled. Thus, the incident angle of the light beams on the image side surface 42 of the fourth lens L4 is reduced. Also, the on-axis back focus is reduced to shorten the total length of the optical system 100, which is conducive to the miniaturization of the optical system 100. For example, the optical system 100 further satisfies the following relationship of 1.2<| R8 |/f, which is more conducive to the miniaturization of the optical system 100.

In some embodiments, the optical system 100 further satisfies the following relationship of 0.4<R9/f<1, wherein R9 is a radius of curvature of the object side surface 51 of the fifth lens L5 near the optical axis. When the relationship is satisfied, a ratio of the radius of curvature of the object side surface 51 of the fifth lens L5 near the optical axis to the focal length of the optical system 100 is reasonably controlled. Thus, the on-axis back focus is further reduced to shorten the total length of the optical system 100, which is conducive to the miniaturization of the optical system 100. For example, the optical system 100 further satisfies the following relationship of 0.45<R9/f<0.8, which is more conducive to the miniaturization of the optical system 100.

In some embodiments, the optical system 100 further satisfies the following relationship of 0.4<| R10 |/f, wherein R10 is a radius of curvature of the image side surface 52 of the fifth lens L5 near the optical axis. When the relationship is satisfied, a ratio of the radius of curvature of the image side surface 52 of the fifth lens L5 near the optical axis to the focal length of the optical system 100 is reasonably controlled. Thus, the fifth lens L5 may effectively balance the astigmatism generated by the first lens L1 to the fourth lens L4, thereby improving the imaging quality of the optical system 100. For example, the optical system 100 further satisfies the following relationship of 0.5<| R10 |/f, which further improves the imaging quality.

In some embodiments, the optical system 100 further satisfies the following relationship of 0.1<R11/f<0.5, wherein R11 is a radius of curvature of the object side surface 61 of the sixth lens L6 near the optical axis. When the relationship is satisfied, a ratio of the radius of curvature of the object side surface 61 of the sixth lens L6 near the optical axis to the focal length of the optical system 100 is reasonably controlled. Thus, the sixth lens L6 may smoothly receive incoming light beams, and the introduction of aberration is reduced, thereby improving the imaging quality of the optical system 100. For example, the optical system 100 further satisfies the following relationship of 0.2<R11/f<0.4, which further improves the imaging quality.

In some embodiments, the optical system 100 further satisfies the following relationship of 0.1<R12/f<0.5, wherein R12 is a radius of curvature of the image side surface 61 of the sixth lens L6 near the optical axis. When the relationship is satisfied, a ratio of the radius of curvature of the image side surface 62 of the sixth lens L6 near the optical axis to the focal length of the optical system 100 is reasonably controlled. Thus, the surface shapes of the object side surface 61 and the image side surface 62 of the sixth lens L6 match each other, such that the light beams may gently exit the sixth lens L6, and the introduction of aberration id reduced, thereby improving the imaging quality of the optical system 100. For example, the optical system 100 further satisfies the following relationship of 0.15<R12/f<0.3, which further improves the imaging quality.

In addition, since the ratio of the radius of curvature of the object side surface or the image side surface of each lens near the optical axis to the focal length of the optical system 100 satisfies the relationship, the radius of curvature of the object side surface or the image side surface of each lens near the optical axis is reasonably controlled. Thus, mutual interference between adjacent lenses is avoided, and the aberration is balanced, which further improves the imaging quality. At the same time, a single lens is prevented from being too curved, thereby reducing the manufacturing difficulty and improving the product yield.

In some embodiments, the optical system 100 further satisfies the following relationship of 2<(R11+R12)/(R11-R12). When the relationship is satisfied, the surface shapes of the object side surface 61 and the image side surface 62 of the sixth lens L6 are similar to each other, which may avoid the introduction of on-axis chromatic aberration and thus improve the imaging quality of the optical system 100. For example, the optical system 100 further satisfies the following relationship of 3<(R11+R12)/(R11-R12), which further improves the imaging quality.

In some embodiments, the optical system 100 further satisfies the following relationship of 1.4<SD52/Yc52<2.1, wherein SD52 is a maximum effective half-aperture of the image side surface 52 of the fifth lens L5, and Yc52 is a vertical distance from an off-axis point of the image side surface 52 of the fifth lens L5 to the optical axis (see FIG. 1). When the relationship is satisfied, the fifth lens L5 may effectively correct the off-axis chromatic aberration, correct the travelling angle of the light beams, reduce the incident angle of the main light beams on the imaging plane 101 of the optical system 100, thereby improving the relative illuminance and enhancing the imaging quality of the optical system 100. For example, the optical system 100 further satisfies the following relationship of 1.6<SD52/Yc52<1.9, which further improves the imaging quality.

In some embodiments, the optical system 100 further satisfies the following relationship of 1.9<SD62/Yc62<2.8, wherein SD62 is a maximum effective half-aperture of the image side surface 62 of the sixth lens L6, and Yc62 is a vertical distance from an off-axis point of the image side surface 62 of the sixth lens L6 to the optical axis (see FIG. 1). When the relationship is satisfied, the sixth lens L6 may effectively correct the off-axis chromatic aberration, correct the travelling angle of the light beams, reduce the incident angle of the main light beams on the imaging plane 101 of the optical system 100, thereby improving the relative illuminance and enhancing the imaging quality of the optical system 100. For example, the optical system 100 further satisfies the following relationship of 2.1<SD62/Yc62<2.6, which further improves the imaging quality.

In some embodiments, the optical system 100 further satisfies the following relationship of 0.3<SAG61/CT6<1.7, wherein SAG61 is a distance from a maximum effective aperture of the object side surface 61 of the sixth lens L6 to the intersection of the object side surface 61 of the sixth lens L6 and the optical axis, and CT6 is the thickness of the sixth lens L6 at the optical axis. When the relationship is satisfied, the sixth lens L6 will not be too curved, which facilitates the arrangement of the multiple lenses, thereby improving the space utilization and facilitating the miniaturization of the optical system 100. For example, the optical system 100 further satisfies the following relationship of 0.4<SAG61/CT6<1.6.

The optical system 100 further satisfies the following relationship of 1.1<TTL/ImgH<1.45, wherein TTL is a distance from the object side surface 11 of the first lens L1 to the imaging plane 101 of the optical system 100 on the optical axis, and ImgH is an image height corresponding to half of the maximum field of view of the optical system 100. When the relationship is satisfied, the optical total length of the optical system 100 is reduced, such that the optical system 100 may have ultra-thin characteristics and meet the miniaturization requirements, and the optical system 100 may have advantages in capturing objects at a medium focal length. The optical system 100 further satisfies the following relationship of 1.2<TTL/ImgH<1.4, which is more conducive to the miniaturization of the optical system 100.

The optical system 100 further satisfies the following relationship of 1.1<TTL/f<1.45. When the relationship is satisfied, miniaturization of the optical system 100 is achieved by controlling the focal length of the optical system 100, and wide-angle function is also achieved. The optical system 100 further satisfies the following relationship of 1.2<TTL/f<1.4, which is more conducive to the miniaturization of the optical system 100.

In some embodiments, the optical system 100 further satisfies the following relationship of 0.9<ImgH/f<1.2. When the relationship is satisfied, the optical system 100 may achieve a wide-angle and a large imaging plane, thereby achieving imaging with high pixels. For example, the optical system 100 further satisfies the following relationship of 1<ImgH/f<1.1, which further improves the imaging quality.

In some embodiments, the optical system 100 further satisfies the following relationship of 0.68<DL/TTL<0.8, wherein DL is a distance from the object side surface 11 of the first lens L1 to the image side surface 62 of the sixth lens L6 at the optical axis. When the relationship is satisfied, the distance between adjacent lenses along the optical axis is reasonably controlled, and the total length of the optical system 100 is also controlled, thereby achieving the miniaturization of the optical system 100 while also reserving a sufficient focusing space for the optical system 100. For example, the optical system 100 further satisfies the following relationship of 0.7<DL/TTL<0.75, which is more conducive to the miniaturization of the optical system 100.

In some embodiments, the optical system 100 further satisfies the following relationship of 0.5<(CT1+CT2+CT3)/(CT4+CT5+CT6)<1.5, wherein CT1 is a thickness of the first lens L1 at the optical axis, CT2 is a thickness of the second lens L2 at the optical axis, CT3 is a thickness of the third lens L3 at the optical axis, CT4 is a thickness of the fourth lens L4 at the optical axis, CT5 is a thickness of the fifth lens L5 at the optical axis, and CT6 is the thickness of the sixth lens L6 at the optical axis. When the relationship is satisfied, the thickness of each lens at the optical axis is reasonably controlled, such that the lenses are reasonably arranged along the optical axis to improve the space utilization in a lens barrel of the optical system 100. For example, the optical system 100 further satisfies the following relationship of 0.7<(CT1+CT2+CT3)/(CT4+CTS+CT6)<1.3, which further improves the space utilization.

In some embodiments, the optical system 100 further satisfies the following relationship of 2.5<DL/(CT1+CT2+CT3)<4. When the relationship is satisfied, the thickness of the preceding lens group at the optical axis is reasonably controlled, such that the preceding lens group and the rear lens group are reasonably arranged along the optical axis to improve the space utilization in the lens barrel of the optical system 100. For example, the optical system 100 further satisfies the following relationship of 2.7<DL/(CT1+CT2+CT3)<3.6, which further improves the space utilization.

In some embodiments, the optical system 100 further satisfies the following relationship of 1.3<CT1/CT2<2.5. When the relationship is satisfied, the ratio of the thicknesses of the first lens L1 and the second lens L2 at the optical axis is reasonably controlled, thereby balancing the aberrations generated by the two lenses and improving the imaging quality of the optical system 100. For example, the optical system 100 further satisfies the following relationship of 1.5<CT1/CT2<2.3, which further improves the imaging quality.

In some embodiments, the optical system 100 further satisfies the following relationship of 0.4<CT4/CT3<1.3. When the relationship is satisfied, the ratio of the thicknesses of the fourth lens L4 and the third lens L3 at the optical axis is reasonably controlled, thereby controlling the thicknesses of the two lenses. Thus, aberrations generated by the two lenses are balanced, and the assembly of the two lenses is easily performed. For example, the optical system 100 further satisfies the following relationship of 0.5<CT4/CT3<1.1, which is more conducive to the assembly of the two lenses.

In some embodiments, the optical system 100 further satisfies the following relationship of 0.7<CT5/CT4<1.6. When the relationship is satisfied, the ratio of the thicknesses of the fifth lens L5 and the fourth lens L4 at the optical axis is reasonably controlled, thereby controlling the thicknesses of the two lenses to facilitate the reasonable arrangement of the two lenes along the optical axis. Also, the aberration is balanced, thereby improving the imaging quality of the optical system 100. For example, the optical system 100 further satisfies the following relationship of 0.8<CT5/CT4<1.5, which further improves the imaging quality.

In some embodiments, the optical system 100 further satisfies the following relationship of 0.65<CT5/CT6<1.5. When the relationship is satisfied, the ratio of the thicknesses of the fifth lens L5 and the sixth lens L6 at the optical axis is reasonably controlled, thereby controlling the thicknesses of the two lenses. Also, the aberration is balanced, thereby improving the imaging quality of the optical system 100. For example, the optical system 100 further satisfies the following relationship of 0.75<CT5/CT6<1.4, which further improves the imaging quality.

In addition, since the ratio of the thicknesses of adjacent lenses at the optical axis is limited, for the entire optical system 100, the thickness of each lens at the optical axis is reasonably controlled, which is conducive to improving the space utilization in the lens barrel and facilitating the assembly of each lens, thereby improving the assembly yield of each lens. Also, the aberration generated by the adjacent lenses is balanced, thereby improving the imaging quality of the optical system 100.

In some embodiments, the optical system 100 further satisfies the following relationship of 0.85<CT4/ET4<1.7, wherein ET4 is a distance from a maximum effective half-aperture of the object side surface 41 of the fourth lens L4 to a maximum effective half-aperture of an image side surface 42 of the fourth lens L4 along a direction parallel to the optical axis (i.e., the thickness of the edge of the fourth lens L4). When the relationship is satisfied, the ratio of the center thickness to the edge thickness of the fourth lens L4 is be reasonably controlled, thereby controlling the overall thickness of the fourth lens L4 and avoiding a large difference between the center thickness and the edge thickness of the fourth lens L4. Such a large difference is not conducive to the manufacture and assembly of the optical system 100. For example, the optical system 100 further satisfies the following relationship of 0.95<CT4/ET4<1.6, which improves the assembly yield.

In some embodiments, the optical system 100 further satisfies the following relationship of 0.38<CT6/ET6<1.4, wherein ET6 is a distance from a maximum effective half-aperture of the object side surface 61 of the sixth lens L6 to a maximum effective half-aperture of the image side surface 62 of the sixth lens L6 along a direction parallel to the optical axis. When the relationship is satisfied, the ratio of the center thickness to the edge thickness of the sixth lens L6 is reasonably controlled, thereby controlling the overall thickness of the sixth lens L6 and avoiding a large difference between the center thickness and the edge thickness of the sixth lens L6. Such a large difference is not conducive to the manufacture and assembly of the optical system 100. For example, the optical system 100 further satisfies the following relationship of 0.43<CT6/ET6<1.3, which improves the assembly yield.

In some embodiments, the optical system 100 further satisfies the following relationship of 1.3<CT1/AT12<4, wherein AT12 is an air interval between the first lens L1 and the second lens L2 at the optical axis. When the relationship is satisfied, the ratio of the center thickness of the first lens L1 to the air interval of the second lens L2 at the optical axis is reasonably controlled, thereby reasonably arranging the assembly space for each lens and avoiding interference between the two lenses during assembly. For example, the optical system 100 further satisfies the following relationship of 1.5<CT1/AT12<3.2, which further avoids interference between the two lenses during assembly.

In some embodiments, the optical system 100 further satisfies the following relationship of 0.7<CT1/AT34<1.3, wherein AT34 is an air interval between the third lens L3 and the fourth lens L4 at the optical axis. When the relationship is satisfied, the assembly space for each lens is reasonably controlled to avoid interference between the two lenses, thereby improving the assembly yield and also increasing the space utilization in the lens barrel. For example, the optical system 100 further satisfies the following relationship of 0.8<CT1/AT34<1.2, which further improves the assembly yield.

In some embodiments, the optical system 100 further satisfies the following relationship of 0.8<CT1/AT56<2.5, wherein AT56 is an air interval between the fifth lens L5 and the sixth lens L6 at the optical axis. When the relationship is satisfied, the assembly space for each lens is reasonably controlled to avoid interference between the two lenses, thereby improving the assembly yield and also increasing the space utilization in the lens barrel. In addition, on the basis of reasonably controlling the assembly space for each lens, the overall aberration generated by the lenses is corrected, thereby improving the imaging quality of the optical system 100. For example, the optical system 100 further satisfies the following relationship of 0.9<CT1/AT56<2, which further improves the imaging quality.

The optical system 100 of the above embodiment swill be described as follows with detail parameters.

### First embodiment

FIG. 1 illustrates the optical system 100 according to a first embodiment of the present application. The optical system 100 includes a stop STO, a first lens L1, a second lens L2, a third lens L3, a fourth lens L4, a fifth lens L5, a sixth lens L6, and a filter 70 sequentially arranged along the optical axis from the object side to the image side.

In this embodiment, the first lens L1 has positive refractive power, the second lens L2 has negative refractive power, the third lens L3 has positive refractive power, the fourth lens L4 has negative refractive power, the fifth lens L5 has positive refractive power, and the sixth lens L6 has negative refractive power.

In this embodiment, the object side surface 11 and image side surface 12 of the first lens L1 are convex and concave near the optical axis, respectively. The object side surface 21 of the second lens L2 is convex near the optical axis, and the image side surface 22 of the second lens L2 is concave near the optical axis. The object side surface 31 and image side surface 32 of the third lens L3 are both convex near the optical axis. The object side surface 41 of the fourth lens L4 is concave near the optical axis, and the image side surface 42 of the fourth lens L4 is convex near the optical axis. The object side surface 51 of the fifth lens L5 is convex near the optical axis, and the image side surface 52 of the fifth lens L5 is concave near the optical axis. The object side surface 61 of the sixth lens L6 is convex near the optical axis, and the image side surface 62 of the sixth lens L6 is concave near the optical axis.

The parameters of optical system 100 are shown in Table 1. The components sequentially arranged along the optical axis from the object side to the image side are arranged in Table 1 from top to bottom. For a same lens, the surface with a smaller surface numeral is the object side surface, and the surface with a larger surface numeral is the image side surface. For example, the surface numerals 1 and 2 correspond to the object side surface and the image side surface of the first lens L1, respectively. The Y-radius in Table 1 is the radius of curvature of the object side surface or the image side surface of the corresponding surface numeral at the optical axis. In the "thickness" column of each lens, the first value is the thickness of the lens at the optical axis, and the second value is the distance from the image side surface of the lens to the next surface at the optical axis. In the "thickness" column of the stop STO, the value is the distance from the stop STO to the vertex of the next surface (the vertex refers to the intersection between the surface and the optical axis) at the optical axis. The direction from the object side surface of the first lens L1 to the image side surface of the last lens is a positive direction of the optical axis. When the value in the "thickness" column of the stop STO is negative, the stop STO is indicated to be located on the image side of the vertex of the next surface. When the value in the "thickness" column of the stop STO is positive, the stop STO is indicated to be located on the object side of the vertex of the next surface. The units of Y-radius, thickness, and focal length in Table 1 are all in millimeters. The refractive index, Abbe number, etc. in Table 1 are obtained at a reference wavelength of 587.56 nm, and the focal length is obtained at a reference wavelength of 555 nm.

In addition, the surface numerals 1 and 2 in Tables 1 and 2 correspond to the object side surface 11 and image side surface 12 of the first lens L1, respectively. The surface numerals 3 and 4 correspond to the object side surface 21 and image side surface 22 of the second lens L2, respectively, and so forth. The surface numerals 11 and 12 correspond to the object side surface 61 and image side surface 62 of the sixth lens L6, respectively.

In the first embodiment, the object side surface and the image side surface of any one of the first lens L1 to sixth lens L6 are both aspherical, and the surface shape x of the aspherical surface may be expressed but not limited to the following aspherical formula:
$x = \frac{ {ch}^{2}}{1 + \sqrt{1 - \left(K+1\right) {c}^{2} {h}^{2}}} + \sum {Aih}^{i}$

Wherein, x is vector height from a point of the aspherical surface to the vertex of the aspherical surface along the optical axis, and the point has a height of h; c is a curvature of the aspherical surface at the optical axis, c=1/Y (i.e., the paraxial curvature c is the reciprocal of the Y-radius in Table 1), K is the cone coefficient, Ai is the correction coefficient corresponding to the i^{th} high-order term of the aspherical surface. Table 2 shows the high-order coefficients A4, A6, A8, A10, A12, A14, A16, A18, and A20 that can be applied for the surface numerals 1-12 in the first embodiment. The surface numerals 7-12 also provide the high-order coefficients A22, A24, A26, A28, A30.

**Table 1**

| First embodiment | | | | | | | | |
|---|---|---|---|---|---|---|---|---|
| f=3.510mm, FNO=2.48, FOV=89.810deg, TTL=4.650mm | | | | | | | | |

| Surface numeral | Surface name | Surface type | Y-radius | Thickne ss | Materi al | Refractive index | Abbe number | Focal length |
|---|---|---|---|---|---|---|---|---|
| OBJ | Object side | sphere | infinity | 400.000 | | | | |
| STO | Stop | sphere | infinity | -0.162 | | | | |
| 1 | First lens | asphere | 1.678 | 0.502 | Plastic | 1.546 | 55.967 | 5.621 |
| 2 | | asphere | 3.307 | 0.211 | | | | |
| 3 | Second lens | asphere | 10.214 | 0.260 | Plastic | 1.678 | 19.246 | -8.064 |
| 4 | | asphere | 3.523 | 0.100 | | | | |
| 5 | Third lens | asphere | 4.087 | 0.418 | Plastic | 1.546 | 55.967 | 6.555 |
| 6 | | asphere | -27.888 | 0.443 | | | | |
| 7 | Fourth lens | asphere | -6.010 | 0.405 | Plastic | 1.546 | 55.967 | -17.824 |
| 8 | | asphere | -16.074 | 0.030 | | | | |
| 9 | Fifth lens | asphere | 2.019 | 0.340 | Plastic | 1.546 | 55.967 | 4.253 |
| 10 | | asphere | 14.505 | 0.375 | | | | |
| 11 | Sixth lens | asphere | 0.966 | 0.337 | Plastic | 1.546 | 55.967 | -5.243 |
| 12 | | asphere | 0.634 | 0.556 | | | | |
| 13 | Filter | sphere | infinity | 0.210 | Glass | 1.518 | 64.166 | |
| 14 | | sphere | infinity | 0.462 | | | | |
| IMG | Imaging surface | sphere | infinity | 0.000 | | | | |

**Table 2**

| First embodiment | | | | | | |
|---|---|---|---|---|---|---|
| Surface numeral | 1 | 2 | 3 | 4 | 5 | 6 |
| K | -2.2309E+00 | 1.0248E+01 | -3.0853E+01 | -8.3012E+01 | -2.3753E+01 | -6.6072E+00 |
| A4 | 6.4178E-02 | -6.1732E-02 | -2.0529E-01 | 8.8972E-04 | -5.4528E-02 | -1.2131E-02 |
| A6 | 1.9277E-01 | 1.1140E-01 | 2.8558E-01 | -1.5655E-01 | 1.6056E-01 | -4.2437E-02 |
| A8 | -1.7692E+00 | -1.0104E+00 | -1.0529E+00 | 3.3314E-01 | -3.4086E-01 | 1.1497E-01 |
| A10 | 1.0172E+01 | 4.9093E+00 | 2.2542E+00 | -5.1133E-01 | 4.4927E-01 | -2.3273E-01 |
| A12 | -3.5343E+01 | -1.5104E+01 | -2.7335E+00 | 5.9349E-01 | -3.6466E-01 | 2.4697E-01 |
| A14 | 7.5285E+01 | 2.7578E+01 | 1.3494E+00 | -4.2852E-01 | 1.5879E-01 | -1.4081E-01 |
| A16 | -9.4487E+01 | -2.8439E+01 | -2.0596E-02 | 1.4064E-01 | -2.7903E-02 | 3.3385E-02 |
| A18 | 6.2604E+01 | 1.4408E+01 | 0.0000E+00 | 0.0000E+00 | 0.0000E+00 | 0.0000E+00 |
| A20 | -1.6084E+01 | -2.3114E+00 | 0.0000E+00 | 0.0000E+00 | 0.0000E+00 | 0.0000E+00 |

| Surface numeral | 7 | 8 | 9 | 10 | 11 | 12 |
|---|---|---|---|---|---|---|
| K | -7.8594E+01 | 2.4514E+01 | -5.6485E+00 | 3.6796E+01 | -6.1984E+00 | -3.1070E+00 |
| A4 | -5.3492E-01 | -1.7986E+00 | 2.3220E+00 | 3.4787E+00 | -2.1841E+01 | -2.9722E+01 |
| A6 | 5.4951E+00 | 8.3922E+00 | 8.3912E+00 | 1.9256E+02 | 1.0828E+02 | 3.1192E+02 |
| A8 | -6.4359E+01 | -1.5532E+02 | -2.8159E+02 | -3.0350E+03 | -2.4159E+02 | -2.7839E+03 |
| A10 | 5.7160E+02 | 1.6092E+03 | 2.7205E+03 | 2.2040E+04 | -2.3105E+03 | 1.8749E+04 |
| A12 | -3.5521E+03 | -1.0070E+04 | -1.7974E+04 | -9.9729E+04 | 3.0618E+04 | -9.0701E+04 |
| A14 | 1.5498E+04 | 4.2432E+04 | 8.4262E+04 | 3.0735E+05 | -1.7565E+05 | 3.1370E+05 |
| A16 | -4.8199E+04 | -1.2583E+05 | -2.7976E+05 | -6.6656E+05 | 6.1627E+05 | -7.7936E+05 |
| A18 | 1.0799E+05 | 2.6705E+05 | 6.6131E+05 | 1.0217E+06 | -1.4458E+06 | 1.3937E+06 |
| A20 | -1.7454E+05 | -4.0636E+05 | -1.1166E+06 | -1.0853E+06 | 2.3468E+06 | -1.7848E+06 |
| A22 | 2.0148E+05 | 4.3860E+05 | 1.3374E+06 | 7.5611E+05 | -2.6541E+06 | 1.6100E+06 |
| A24 | -1.6188E+05 | -3.2719E+05 | -1.1099E+06 | -2.9783E+05 | 2.0584E+06 | -9.8925E+05 |
| A26 | 8.5931E+04 | 1.6023E+05 | 6.0683E+05 | 2.8562E+04 | -1.0460E+06 | 3.8858E+05 |
| A28 | -2.7073E+04 | -4.6327E+04 | -1.9652E+05 | 2.3541E+04 | 3.1413E+05 | -8.5974E+04 |
| A30 | 3.8305E+03 | 5.9917E+03 | 2.8543E+04 | -7.0360E+03 | -4.2320E+04 | 7.7969E+03 |

Referring to (A) of FIG. 2, which shows the longitudinal spherical aberration diagram of the optical system 100 in the first embodiment at wavelengths of 435nm, 470nm, 510nm, 555nm, 610nm, and 650nm. In (A) of FIG. 2, the horizontal coordinate along the X-axis represents the deviation of the focus point, and the vertical coordinate along the Y-axis represents the normalized field of view. The longitudinal spherical aberration diagram represents the deviation of the focus point when the light beams with different wavelengths travel through the lenses of the optical system 100. From (A) of FIG. 2, the deviation of the focus point of the rays with different wavelengths in the first embodiment is almost the same. Thus, the diffuse spots or chromatic halos in the images are suppressed, indicating that the imaging quality of the optical system 100 in the embodiment is good.

Referring to (B) of FIG. 2, which shows the astigmatism diagram of the optical system 100 in the first embodiment at a wavelength of 555 nm. The horizontal coordinate along the X-axis represents the deviation of the focus point. The vertical coordinate along the Y-axis represents the image heigh in mm. In the astigmatism diagram, T represents the curvature of the imaging plane 101 in the tangential direction, and S represents the curvature of the imaging plane 101 in the sagittal direction. As shown in (B) of FIG. 2, the field curvature of the optical system 100 is small, the field curvature and astigmatism of each field of view have been corrected, and the central and marginal fields have clear images.

Referring to (C) of FIG. 2, which shows a distortion diagram of the optical system 100 in the first embodiment at a wavelength of 555 nm. The horizontal axis along the X-axis represents distortion, and the vertical axis along the Y-axis represents image height in mm. From (C) of FIG. 2, at this wavelength, the distortion of the images caused by the main light beams is small, and the imaging quality of the optical system 100 is good.

From (A), (B), and (C) of FIG. 2, the optical system 100 of this embodiment has a small aberration difference and good imaging quality.

### Second embodiment not falling under the scope of the claimed subject-matter

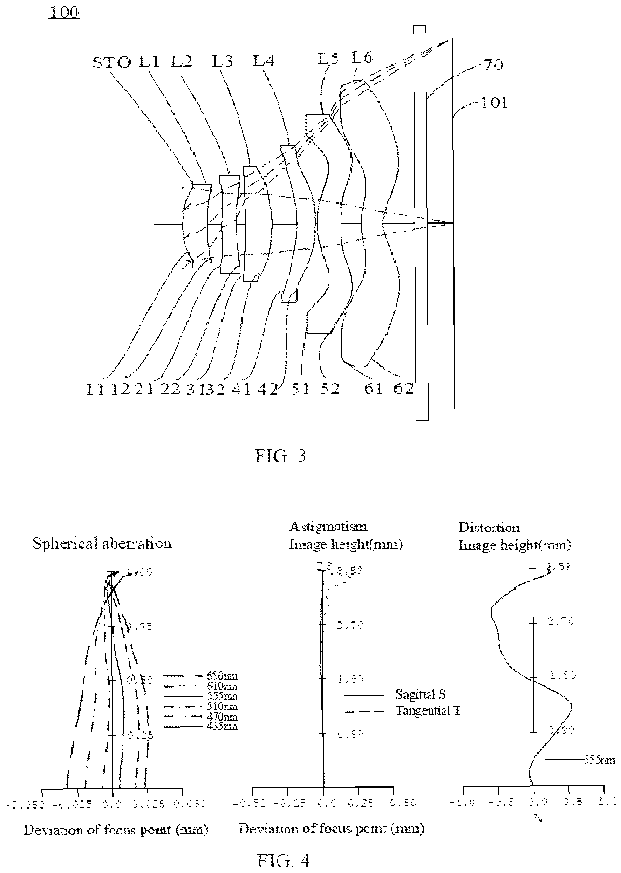

As shown in FIG. 3, in this embodiment not falling under the scope of the claimed subject-matter, the refractive power of the first lens L1 to the sixth lens L6 is the same as that of the first embodiment. In the first lens L1 to the sixth lens L6, except for the third lens L3 that has a concave object side surface near the optical axis and a convex image side surface near the optical axis, the surface shapes of the other lenses are the same as those of the first embodiment.

The parameters of optical system 100 are shown in Table 3. The definitions of each parameter are referred to the description of the previous embodiments, which will not be repeated here. Table 4 shows the high-order coefficients that can be applied for each aspherical lens in the second embodiment. The high-order coefficients A4, A6, A8, A10, A12, A14, A16, A18, A20 are for the surface numerals 1-12. The surface numerals 7-12 also provide the high-order coefficients A22, A24, A26, A28, A30.

**Table 3**

| Second embodiment | | | | | | | | |
|---|---|---|---|---|---|---|---|---|
| f=3.595mm, FNO=2.48, FOV=89.240deg, TTL=4.520mm | | | | | | | | |
| Surface numeral | Surface name | Surface type | Y-Radius | Thickne ss | Materi al | Refractive index | Abbe number | Focal length |
| OBJ | Object side | sphere | infinity | 400.000 | | | | |
| STO | Stop | sphere | infinity | -0.177 | | | | |
| 1 | First lens | asphere | 1.607 | 0.409 | Plastic | 1.546 | 55.967 | 5.268 |
| 2 | | asphere | 3.312 | 0.255 | | | | |
| 3 | Second lens | asphere | 4.178 | 0.230 | Plastic | 1.678 | 19.246 | -13.454 |
| 4 | | asphere | 2.801 | 0.148 | | | | |
| 5 | Third lens | asphere | -79.155 | 0.438 | Plastic | 1.546 | 55.967 | 7.290 |
| 6 | | asphere | -3.799 | 0.418 | | | | |
| 7 | Fourth lens | asphere | -3.257 | 0.259 | Plastic | 1.546 | 55.967 | -8.452 |
| 8 | | asphere | -11.366 | 0.059 | | | | |
| 9 | Fifth lens | asphere | 1.828 | 0.380 | Plastic | 1.546 | 55.967 | 3.704 |
| 10 | | asphere | 17.574 | 0.385 | | | | |
| 11 | Sixth lens | asphere | 1.091 | 0.299 | Plastic | 1.546 | 55.967 | -4.152 |
| 12 | | asphere | 0.665 | 0.300 | | | | |
| 13 | Filter | sphere | infinity | 0.210 | Glass | 1.518 | 64.166 | |
| 14 | | sphere | infinity | 0.730 | | | | |
| IMG | Imaging surface | sphere | infinity | 0.000 | | | | |

**Table 4**

| Second embodiment | | | | | | |
|---|---|---|---|---|---|---|
| Surface numeral | 1 | 2 | 3 | 4 | 5 | 6 |
| K | -2.3042E+00 | 9.1284E+00 | -7.4236E+01 | -3.2755E+01 | -9.9000E+01 | -4.0103E+00 |
| A4 | 6.5595E-02 | -7.8931E-02 | -9.4652E-02 | 3.4800E-02 | 8.5231E-03 | -2.7109E-02 |
| A6 | 2.2949E-01 | 1.7035E-01 | -2.7995E-01 | -3.3729E-01 | -5.5855E-02 | -7.5811E-03 |
| A8 | -2.4104E+00 | -2.1478E+00 | 7.7269E-01 | 8.0940E-01 | 1.0727E-01 | -6.7760E-02 |
| A10 | 1.5894E+01 | 1.4072E+01 | -2.3564E+00 | -1.4841E+00 | -9.6775E-02 | 2.3898E-02 |
| A12 | -6.4522E+01 | -5.5561E+01 | 4.6565E+00 | 1.9017E+00 | -1.2967E-02 | 1.0721E-01 |
| A14 | 1.6404E+02 | 1.3341E+02 | -5.0245E+00 | -1.4095E+00 | 4.3684E-02 | -1.4454E-01 |
| A16 | -2.5457E+02 | -1.9167E+02 | 2.2616E+00 | 4.5240E-01 | -1.0292E-02 | 5.7773E-02 |
| A18 | 2.2066E+02 | 1.5138E+02 | 0.0000E+00 | 0.0000E+00 | 0.0000E+00 | 0.0000E+00 |
| A20 | -8.1909E+01 | -5.0471E+01 | 0.0000E+00 | 0.0000E+00 | 0.0000E+00 | 0.0000E+00 |

| Surface numeral | 7 | 8 | 9 | 10 | 11 | 12 |
|---|---|---|---|---|---|---|
| K | -2.7510E+01 | -8.9366E+01 | -7.5350E+00 | 2.9814E+01 | -4.8733E+00 | -3.4858E+00 |
| A4 | -2.4126E-01 | -4.2634E-01 | 2.5912E-01 | 4.2277E-01 | -6.3743E-01 | -4.4498E-01 |
| A6 | 1.2353E+00 | 6.5071E-01 | -1.0627E+00 | -4.6458E-01 | 6.8527E-01 | 5.8219E-01 |
| A8 | -5.4750E+00 | -2.0611E+00 | 3.2220E+00 | 3.2922E-01 | -2.2047E-01 | -5.4162E-01 |
| A10 | 1.9881E+01 | 9.7131E+00 | -7.2433E+00 | -6.5156E-01 | -5.9211E-01 | 3.2109E-01 |
| A12 | -5.3294E+01 | -3.0029E+01 | 1.1336E+01 | 1.2315E+00 | 9.9172E-01 | -1.1231E-01 |
| A14 | 1.0167E+02 | 5.9427E+01 | -1.2797E+01 | -1.4079E+00 | -7.7323E-01 | 1.4544E-02 |
| A16 | -1.3837E+02 | -7.9509E+01 | 1.0763E+01 | 1.0411E+00 | 3.7503E-01 | 6.4104E-03 |
| A18 | 1.3511E+02 | 7.4312E+01 | -6.8330E+00 | -5.2773E-01 | -1.2302E-01 | -4.2186E-03 |
| A20 | -9.4523E+01 | -4.9135E+01 | 3.2563E+00 | 1.8826E-01 | 2.8164E-02 | 1.2276E-03 |
| A22 | 4.6787E+01 | 2.2899E+01 | -1.1403E+00 | -4.7379E-02 | -4.5223E-03 | -2.2079E-04 |
| A24 | -1.5926E+01 | -7.3605E+00 | 2.8287E-01 | 8.2494E-03 | 5.0050E-04 | 2.5843E-05 |
| A26 | 3.5273E+00 | 1.5539E+00 | -4.6793E-02 | -9.4632E-04 | -3.6426E-05 | -1.9249E-06 |
| A28 | -4.5443E-01 | -1.9402E-01 | 4.6114E-03 | 6.4347E-05 | 1.5711E-06 | 8.3147E-08 |
| A30 | 2.5579E-02 | 1.0862E-02 | -2.0421E-04 | -1.9643E-06 | -3.0457E-08 | -1.5891E-09 |

From (A) longitudinal spherical aberration diagram, (B) astigmatism diagram, and (C) distortion diagram of FIG. 4, the longitudinal spherical aberration, the astigmatism, and the distortion of the optical system 100 are controlled, thus the optical system 100 of this embodiment has good imaging quality. In addition, the wavelengths corresponding to the diagrams of (A), (B), and (C) of FIG. 4 are referred to the description of (A), (B), and (C) of FIG. 2 in the first embodiment, which will not be repeated here. Third Embodiment not falling under the scope of the claimed subject-matter

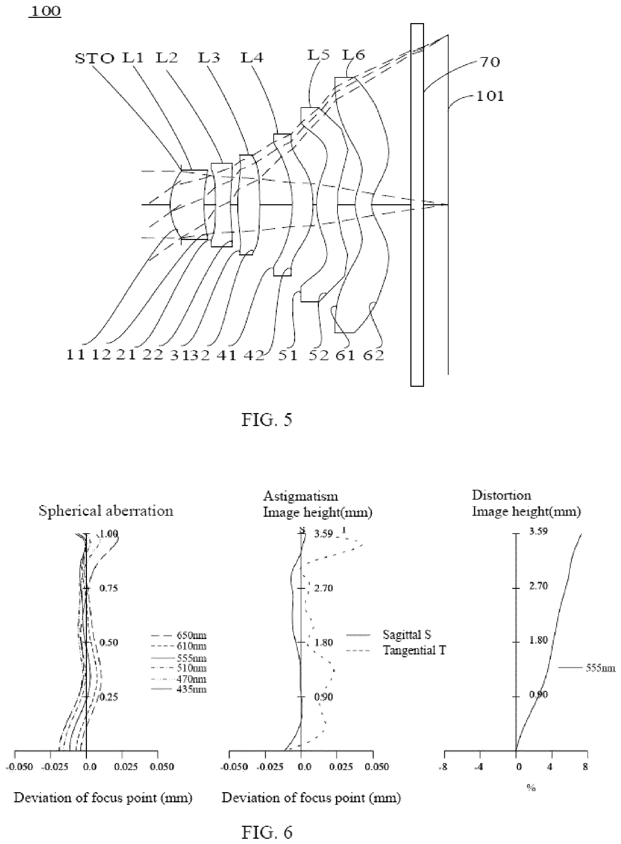

As shown in FIG. 5, in this embodiment not falling under the scope of the claimed subject-matter, the refractive power of the first lens L1 to the sixth lens L6 is the same as that of the first embodiment. In the first lens L 1 to the sixth lens L6, except for the second lens L2 that has a concave object side surface and a concave image side surface near the optical axis, the surface shapes of the other lenses are the same as those of the first embodiment.

The parameters of optical system 100 are shown in Table 5. The definitions of each parameter are referred to the description of the previous embodiments, which will not be repeated here. Table 6 shows the high-order coefficients that can be applied for each aspherical lens in the third embodiment. The high-order coefficients A4, A6, A8, A10, A12, A14, A16, A18, and A20 are for the surface numerals 1-12. The surface numerals 9-12 also provide high-order coefficients A22, A24, A26, A28, A30.

**Table 5**

| Third embodiment | | | | | | | | |
|---|---|---|---|---|---|---|---|---|
| f=3.604mm, FNO=2.48, FOV=85.000deg, TTL=4.640mm | | | | | | | | |
| Surface numeral | Surface name | Surface type | Y-Radius | Thickne ss | Materi al | Refractive index | Abbe number | Focal length |
| OBJ | Object side | sphere | infinity | 400.000 | | | | |
| STO | Stop | sphere | infinity | -0.176 | | | | |
| 1 | First lens | asphere | 1.615 | 0.564 | Plastic | 1.546 | 55.967 | 4.647 |
| 2 | | asphere | 3.891 | 0.192 | | | | |
| 3 | Second lens | asphere | -85.336 | 0.255 | Plastic | 1.678 | 19.246 | -6.928 |
| 4 | | asphere | 4.973 | 0.120 | | | | |
| 5 | Third lens | asphere | 4.482 | 0.361 | Plastic | 1.546 | 55.967 | 6.414 |
| 6 | | asphere | -15.591 | 0.548 | | | | |
| 7 | Fourth lens | asphere | -3.472 | 0.345 | Plastic | 1.546 | 55.967 | -24.056 |
| 8 | | asphere | -4.884 | 0.062 | | | | |
| 9 | Fifth lens | asphere | 2.196 | 0.348 | Plastic | 1.546 | 55.967 | 4.463 |
| 10 | | asphere | 20.913 | 0.298 | | | | |
| 11 | Sixth lens | asphere | 1.128 | 0.274 | Plastic | 1.546 | 55.967 | -4.654 |
| 12 | | asphere | 0.714 | 0.650 | | | | |
| 13 | Filter | sphere | infinity | 0.210 | Glass | 1.518 | 64.166 | |
| 14 | | sphere | infinity | 0.411 | | | | |
| IMG | Imaging surface | sphere | infinity | 0.000 | | | | |

**Table 6**

| Third embodiment | | | | | | |
|---|---|---|---|---|---|---|
| Surface numeral | 1 | 2 | 3 | 4 | 5 | 6 |
| K | -1.9370E+00 | 1.0946E+01 | 9.9000E+01 | -6.8580E+01 | -4.6019E+01 | 9.9000E+01 |
| A4 | 6.5812E-02 | -5.0783E-02 | -2.1182E-01 | -1.1235E-01 | -1.2143E-02 | -1.0972E-02 |
| A6 | 7.2700E-02 | -3.3863E-02 | 4.3088E-01 | 2.2965E-01 | 1.6288E-01 | 5.8783E-02 |
| A8 | -3.1778E-01 | 2.5406E-01 | -1.9983E+00 | -5.2842E-01 | -1.0866E+00 | -3.2852E-01 |
| A10 | 9.9248E-01 | -1.0701E+00 | 6.3860E+00 | 9.7846E-01 | 3.6669E+00 | 5.4723E-01 |
| A12 | -1.4971E+00 | 1.7375E+00 | -1.2784E+01 | -1.1448E+00 | -7.9439E+00 | -3.6236E-01 |
| A14 | 8.9104E-01 | -1.2719E+00 | 1.3736E+01 | 6.8264E-01 | 1.0900E+01 | -3.7969E-01 |
| A16 | 0.0000E+00 | 0.0000E+00 | -6.4238E+00 | -1.5506E-01 | -9.1696E+00 | 9.2286E-01 |
| A18 | 0.0000E+00 | 0.0000E+00 | 0.0000E+00 | 0.0000E+00 | 4.2709E+00 | -6.8583E-01 |
| A20 | 0.0000E+00 | 0.0000E+00 | 0.0000E+00 | 0.0000E+00 | -8.2884E-01 | 1.8925E-01 |

| Surface numeral | 7 | 8 | 9 | 10 | 11 | 12 |
|---|---|---|---|---|---|---|
| K | -3.8849E+00 | -4.5859E+01 | -8.0749E-01 | 3.9796E+01 | -4.2011E+00 | -1.0000E+00 |
| A4 | -1.5571E-01 | -6.0439E-01 | 3.3394E-01 | 1.5051E+01 | -1.4656E+01 | -6.2131E+01 |
| A6 | 5.0503E-01 | 1.2673E+00 | -4.7349E+00 | -1.4800E+02 | -6.7710E+01 | 5.1230E+02 |
| A8 | -8.5684E-01 | -1.9231E+00 | 3.6047E+01 | 1.0156E+03 | 1.6688E+03 | -3.6237E+03 |
| A10 | 7.2397E-01 | 1.9303E+00 | -5.2949E+02 | -5.9316E+03 | -1.4965E+04 | 1.9982E+04 |
| A12 | -1.8852E-01 | -1.2296E+00 | 3.8207E+03 | 2.7416E+04 | 8.6056E+04 | -8.1613E+04 |
| A14 | -1.4785E-01 | 5.0445E-01 | -1.6563E+04 | -9.4135E+04 | -3.3973E+05 | 2.4250E+05 |
| A16 | 1.2678E-01 | -1.3227E-01 | 4.8737E+04 | 2.3490E+05 | 9.4309E+05 | -5.2087E+05 |
| A18 | -3.4105E-02 | 2.0510E-02 | -1.0229E+05 | -4.2334E+05 | -1.8673E+06 | 8.0427E+05 |
| A20 | 2.9885E-03 | -1.4410E-03 | 1.5495E+05 | 5.4687E+05 | 2.6503E+06 | -8.8304E+05 |
| A22 | 0.0000E+00 | 0.0000E+00 | -1.6776E+05 | -4.9779E+05 | -2.6783E+06 | 6.7437E+05 |
| A24 | 0.0000E+00 | 0.0000E+00 | 1.2624E+05 | 3.0877E+05 | 1.8829E+06 | -3.4373E+05 |
| A26 | 0.0000E+00 | 0.0000E+00 | -6.2594E+04 | -1.2261E+05 | -8.7589E+05 | 1.0818E+05 |
| A28 | 0.0000E+00 | 0.0000E+00 | 1.8361E+04 | 2.7531E+04 | 2.4255E+05 | -1.7877E+04 |
| A30 | 0.0000E+00 | 0.0000E+00 | -2.4119E+03 | -2.5588E+03 | -3.0292E+04 | 9.9130E+02 |

From (A) longitudinal spherical aberration diagram, (B) astigmatism diagram, and (C) distortion diagram of FIG. 6, the longitudinal spherical aberration, the astigmatism, and the distortion of the optical system 100 are controlled, thus the optical system 100 of this embodiment has good imaging quality. In addition, the wavelengths corresponding to the diagrams of (A), (B), and (C) of FIG. 6 are referred to the description of (A), (B), and (C) of FIG. 2 in the first embodiment, which will not be repeated here.

### Fourth embodiment

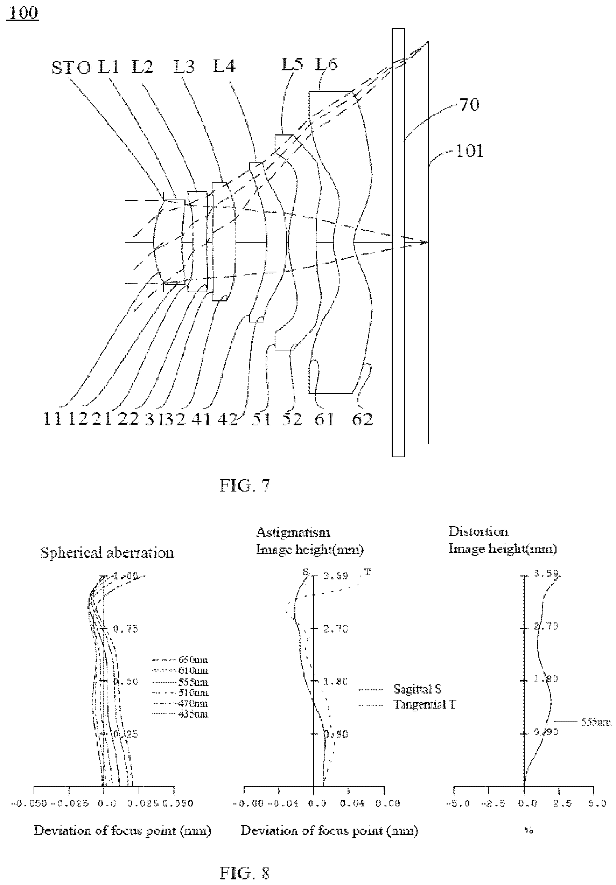

As shown in FIG. 7, in this embodiment, the refractive power of the first lens L1 to the sixth lens L6 is the same as that of the first embodiment. In the first lens L 1 to the sixth lens L6, except for the second lens L2 that has a concave object side surface and a concave image side surface near the optical axis and the fifth lens L5 that has a convex object side surface and a convex image side surface near the optical axis, the surface shapes of the other lenses are the same as those of the first embodiment.

The parameters of optical system 100 are shown in Table 7. The definitions of each parameter are referred to the description of the previous embodiments, which will not be repeated here. Table 8 shows the high-order coefficients that can be applied for each aspherical lens in the fourth embodiment. The high-order coefficients A4, A6, A8, A10, A12, A14, A16, A18, and A20 are for the surface numerals 1-12. The surface numerals 7-12 also provide high-order coefficients A22, A24, A26, A28, A30.

**Table 7**

| Fourth embodiment | | | | | | | | |
|---|---|---|---|---|---|---|---|---|
| f=3.500mm, FNO=2.28, FOV=89.592deg, TTL=4.660mm | | | | | | | | |
| Surface numeral | Surface name | Surface type | Y-Radius | Thickne ss | Materi al | Refractive index | Abbe number | Focal length |
| OBJ | Object side | sphere | infinity | 400.000 | | | | |
| STO | Stop | sphere | infinity | -0.163 | | | | |
| 1 | First lens | asphere | 1.744 | 0.482 | Plastic | 1.546 | 55.967 | 5.189 |
| 2 | | asphere | 4.092 | 0.187 | | | | |
| 3 | Second lens | asphere | -51.691 | 0.239 | Plastic | 1.678 | 19.246 | -8.209 |
| 4 | | asphere | 6.244 | 0.094 | | | | |
| 5 | Third lens | asphere | 5.222 | 0.394 | Plastic | 1.546 | 55.967 | 6.742 |
| 6 | | asphere | -12.164 | 0.521 | | | | |
| 7 | Fourth lens | asphere | -3.868 | 0.344 | Plastic | 1.546 | 55.967 | -16.063 |
| 8 | | asphere | -7.134 | 0.030 | | | | |
| 9 | Fifth lens | asphere | 2.469 | 0.470 | Plastic | 1.546 | 55.967 | 4.192 |
| 10 | | asphere | -29.353 | 0.295 | | | | |
| 11 | Sixth lens | asphere | 1.077 | 0.348 | Plastic | 1.546 | 55.967 | -4.989 |
| 12 | | asphere | 0.684 | 0.646 | | | | |
| 13 | Filter | sphere | infinity | 0.210 | Glass | 1.518 | 64.166 | |
| 14 | | sphere | infinity | 0.399 | | | | |
| IMG | Imaging surface | sphere | infinity | 0.000 | | | | |

**Table 8**

| Fourth embodiment | | | | | | |
|---|---|---|---|---|---|---|
| Surface numeral | 1 | 2 | 3 | 4 | 5 | 6 |
| K | -2.4350E+00 | 7.0346E+00 | 9.9000E+01 | -9.8824E+01 | -8.7274E+01 | 5.4524E+01 |
| A4 | 6.1223E-02 | -5.0870E-02 | -1.6347E-01 | -1.0530E-01 | 3.5091E-03 | -3.7758E-02 |
| A6 | 3.2430E-02 | -1.2804E-02 | 9.3656E-02 | 8.5458E-02 | -1.1883E-01 | 1.9805E-01 |
| A8 | -9.5252E-02 | 7.9092E-02 | -8.9424E-02 | -1.0992E-03 | 9.3727E-02 | -1.1017E+00 |
| A10 | 2.2534E-01 | -4.0205E-01 | 2.6924E-01 | 2.0609E-01 | 4.0845E-01 | 3.2046E+00 |
| A12 | -2.6181E-01 | 5.5445E-01 | -1.1159E+00 | -7.6133E-01 | -2.1724E+00 | -6.1956E+00 |
| A14 | 1.1397E-01 | -4.9450E-01 | 1.3801E+00 | 7.9080E-01 | 4.8760E+00 | 7.7128E+00 |
| A16 | 0.0000E+00 | 0.0000E+00 | -8.3582E-01 | -2.7995E-01 | -6.1637E+00 | -5.9038E+00 |
| A18 | 0.0000E+00 | 0.0000E+00 | 0.0000E+00 | 0.0000E+00 | 4.1246E+00 | 2.4999E+00 |
| A20 | 0.0000E+00 | 0.0000E+00 | 0.0000E+00 | 0.0000E+00 | -1.1184E+00 | -4.3956E-01 |

| Surface numeral | 7 | 8 | 9 | 10 | 11 | 12 |
|---|---|---|---|---|---|---|
| K | -1.3468E+00 | 4.3767E+00 | -1.4586E+00 | 1.5190E-01 | -5.6777E+00 | -1.0000E+00 |
| A4 | -7.1464E-01 | -3.2399E+00 | 1.8459E-01 | 1.1798E+01 | -9.7421E+00 | -7.4195E+01 |
| A6 | 2.0509E+00 | 1.7960E+01 | 4.2579E+00 | -1.1319E+02 | -2.3684E+02 | 6.5793E+02 |
| A8 | 2.9278E+01 | -1.1397E+02 | -2.3842E+02 | 9.1208E+02 | 4.8037E+03 | -4.2655E+03 |
| A10 | -4.3841E+02 | 6.3074E+02 | 2.7833E+03 | -6.8328E+03 | -4.5117E+04 | 1.9063E+04 |
| A12 | 3.0772E+03 | -2.7810E+03 | -1.9085E+04 | 3.8284E+04 | 2.5813E+05 | -5.7892E+04 |
| A14 | -1.3805E+04 | 9.9340E+03 | 8.6486E+04 | -1.5114E+05 | -9.7922E+05 | 1.1641E+05 |
| A16 | 4.2823E+04 | -2.8654E+04 | -2.6932E+05 | 4.2262E+05 | 2.5785E+06 | -1.3868E+05 |
| A18 | -9.4656E+04 | 6.4688E+04 | 5.8651E+05 | -8.4587E+05 | -4.8332E+06 | 4.2120E+04 |
| A20 | 1.5048E+05 | -1.0978E+05 | -8.9803E+05 | 1.2146E+06 | 6.5095E+06 | 1.6389E+05 |
| A22 | -1.7097E+05 | 1.3480E+05 | 9.5989E+05 | -1.2390E+06 | -6.2652E+06 | -3.2594E+05 |
| A24 | 1.3551E+05 | -1.1504E+05 | -6.9918E+05 | 8.7526E+05 | 4.2106E+06 | 3.1074E+05 |
| A26 | -7.1176E+04 | 6.4386E+04 | 3.2959E+05 | -4.0643E+05 | -1.8788E+06 | -1.7174E+05 |
| A28 | 2.2260E+04 | -2.1200E+04 | -9.0222E+04 | 1.1145E+05 | 5.0042E+05 | 5.2649E+04 |
| A30 | -3.1362E+03 | 3.1091E+03 | 1.0822E+04 | -1.3656E+04 | -6.0244E+04 | -6.9435E+03 |

From (A) longitudinal spherical aberration diagram, (B) astigmatism diagram, and (C) distortion diagram of FIG. 8, the longitudinal spherical aberration, the astigmatism, and the distortion of the optical system 100 are well controlled, thus the optical system 100 of this embodiment has good imaging quality. In addition, the wavelengths corresponding to the diagrams of (A), (B), and (C) of FIG. 8 are referred to the description of (A), (B), and (C) of FIG. 2 in the first embodiment, which will not be repeated here.

### Fifth embodiment

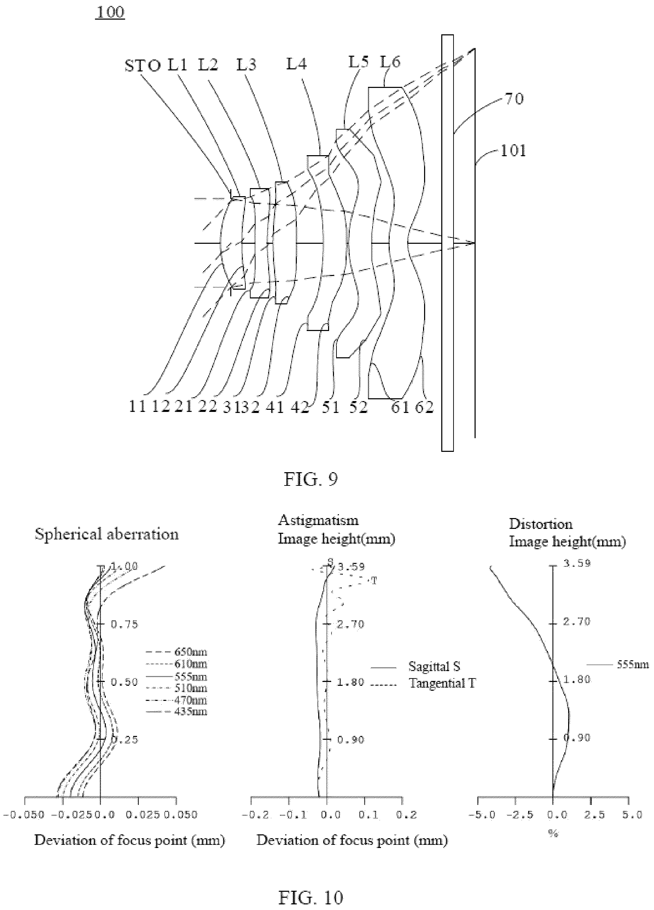

As shown in FIG. 9, in this embodiment, the refractive power of the first lens L1 to the sixth lens L6 is the same as that of the first embodiment. In the first lens L1 to the sixth lens L6, except for the fifth lens L5 that has a convex object side surface and a convex image side surface near the optical axis, the surface shapes of the other lenses are the same as those of the first embodiment.

The parameters of the optical system 100 are shown in Table 9. The definitions of each parameter are referred to the description of the previous embodiments, which will not be repeated here. Table 10 shows the high-order coefficients that can be applied for each aspherical lens in the fifth embodiment. The high-order coefficients A4, A6, A8, A10, A12, A14, A16, A18, and A20 are for the surface numerals 1-12. The surface numerals 7-12 also provide high-order coefficients A22, A24, A26, A28, A30.

**Table 9**

| Fifth embodiment | | | | | | | | |
|---|---|---|---|---|---|---|---|---|
| f=3.5297mm, FNO=2.08, FOV=92.600deg, TTL=4.820mm | | | | | | | | |
| Surface numeral | Surface name | Surface type | Y-Radius | Thickne ss | Materi al | Refractive index | Abbe number | Focal length |
| OBJ | Object side | sphere | infinity | 400.000 | | | | |
| STO | Stop | sphere | infinity | -0.202 | | | | |
| 1 | First lens | asphere | 1.837 | 0.403 | Plastic | 1.546 | 55.967 | 5.760 |
| 2 | | asphere | 4.077 | 0.243 | | | | |
| 3 | Second lens | asphere | 9.353 | 0.260 | Plastic | 1.678 | 19.246 | -7.871 |
| 4 | | asphere | 3.356 | 0.108 | | | | |
| 5 | Third lens | asphere | 4.226 | 0.445 | Plastic | 1.546 | 55.967 | 5.880 |
| 6 | | asphere | -12.828 | 0.481 | | | | |
| 7 | Fourth lens | asphere | -6.086 | 0.478 | Plastic | 1.546 | 55.967 | -21.295 |
| 8 | | asphere | -13.135 | 0.045 | | | | |
| 9 | Fifth lens | asphere | 2.288 | 0.465 | Plastic | 1.546 | 55.967 | 4.017 |
| 10 | | asphere | -48.400 | 0.284 | | | | |
| 11 | Sixth lens | asphere | 1.234 | 0.349 | Plastic | 1.546 | 55.967 | -4.265 |
| 12 | | asphere | 0.726 | 0.645 | | | | |
| 13 | Filter | sphere | infinity | 0.210 | Glass | 1.518 | 64.166 | |
| 14 | | sphere | infinity | 0.405 | | | | |
| IMG | Imaging surface | sphere | infinity | 0.000 | | | | |

**Table 10**

| Fifth embodiment | | | | | | |
|---|---|---|---|---|---|---|
| Surface numeral | 1 | 2 | 3 | 4 | 5 | 6 |
| K | -2.7397E+00 | 1.0475E+01 | 9.7447E+01 | -2.9233E+01 | -6.1779E+01 | 9.8528E+01 |
| A4 | 4.9786E-02 | -5.1944E-02 | -2.2395E-01 | -9.5788E-02 | -1.7622E-02 | -3.9217E-02 |
| A6 | 6.7199E-02 | -2.4210E-02 | 4.1013E-01 | 1.8255E-01 | 6.5341E-01 | 1.9865E-01 |
| A8 | -2.7330E-01 | 1.7362E-01 | -2.0878E+00 | -5.2207E-01 | -5.1468E+00 | -1.8981E+00 |
| A10 | 7.7225E-01 | -5.0251E-01 | 8.2287E+00 | 1.0490E+00 | 1.9757E+01 | 1.4880E+01 |
| A12 | -1.2450E+00 | 5.8039E-01 | -2.2724E+01 | -1.1796E+00 | -2.9929E+01 | -8.1854E+01 |
| A14 | 1.0825E+00 | -2.4949E-01 | 4.1717E+01 | 5.5134E-01 | -8.0872E+01 | 2.9998E+02 |
| A16 | -4.0233E-01 | -9.9006E-02 | -4.9364E+01 | -2.7655E-02 | 5.7538E+02 | -7.5302E+02 |
| A18 | 0.0000E+00 | 0.0000E+00 | 3.3974E+01 | 1.6568E-02 | -1.6034E+03 | 1.3260E+03 |
| A20 | 0.0000E+00 | 0.0000E+00 | -1.0434E+01 | -4.1452E-02 | 2.7292E+03 | -1.6549E+03 |
| A22 | 0.0000E+00 | 0.0000E+00 | 0.0000E+00 | 0.0000E+00 | -3.0715E+03 | 1.4568E+03 |
| A24 | 0.0000E+00 | 0.0000E+00 | 0.0000E+00 | 0.0000E+00 | 2.3013E+03 | -8.8434E+02 |
| A26 | 0.0000E+00 | 0.0000E+00 | 0.0000E+00 | 0.0000E+00 | -1.1064E+03 | 3.5211E+02 |
| A28 | 0.0000E+00 | 0.0000E+00 | 0.0000E+00 | 0.0000E+00 | 3.0919E+02 | -8.2693E+01 |
| A30 | 0.0000E+00 | 0.0000E+00 | 0.0000E+00 | 0.0000E+00 | -3.8203E+01 | 8.6735E+00 |

| Surface numeral | 7 | 8 | 9 | 10 | 11 | 12 |
|---|---|---|---|---|---|---|
| K | 6.3034E+00 | 2.6627E+01 | -6.8653E-01 | 6.0042E+01 | -3.2963E+00 | -1.0234E+00 |
| A4 | -1.1717E-01 | -4.8634E-01 | 4.5034E-02 | 5.1940E-01 | -3.8830E-01 | -8.9918E-01 |
| A6 | 9.5847E-02 | 1.3685E+00 | 2.5366E-01 | -4.9665E-01 | 6.1462E-02 | 1.0036E+00 |
| A8 | 1.8541E+00 | -4.4676E+00 | -1.8350E+00 | -7.8056E-02 | 5.3199E-01 | -9.0514E-01 |
| A10 | -1.1046E+01 | 1.1416E+01 | 4.5158E+00 | 6.1695E-01 | -9.6533E-01 | 6.1985E-01 |
| A12 | 3.3888E+01 | -2.1203E+01 | -7.0251E+00 | -7.6003E-01 | 9.1203E-01 | -3.2016E-01 |
| A14 | -6.7811E+01 | 2.8888E+01 | 7.6090E+00 | 5.8050E-01 | -5.5236E-01 | 1.2533E-01 |
| A16 | 9.4866E+01 | -2.9014E+01 | -5.8832E+00 | -3.2127E-01 | 2.3067E-01 | -3.7135E-02 |
| A18 | -9.5395E+01 | 2.1401E+01 | 3.2674E+00 | 1.3419E-01 | -6.8811E-02 | 8.2702E-03 |
| A20 | 6.9447E+01 | -1.1477E+01 | -1.3001E+00 | -4.2260E-02 | 1.4868E-02 | -1.3676E-03 |
| A22 | -3.6276E+01 | 4.3993E+00 | 3.6630E-01 | 9.8098E-03 | -2.3181E-03 | 1.6470E-04 |
| A24 | 1.3237E+01 | -1.1703E+00 | -7.1220E-02 | -1.6142E-03 | 2.5475E-04 | -1.3989E-05 |
| A26 | -3.1971E+00 | 2.0485E-01 | 9.0791E-03 | 1.7691E-04 | -1.8735E-05 | 7.9223E-07 |
| A28 | 4.5809E-01 | -2.1195E-02 | -6.8255E-04 | -1.1524E-05 | 8.2744E-07 | -2.6797E-08 |
| A30 | -2.9396E-02 | 9.8157E-04 | 2.2931E-05 | 3.3632E-07 | -1.6583E-08 | 4.0892E-10 |

From (A) longitudinal spherical aberration diagram, (B) astigmatism diagram, and (C) distortion diagram of FIG. 10, the longitudinal spherical aberration, the astigmatism, and the distortion of the optical system 100 are well controlled, thus the optical system 100 of this embodiment has good imaging quality. In addition, the wavelengths corresponding to the diagrams of (A), (B), and (C) of FIG. 10 are referred to the description of (A), (B), and (C) of FIG. 2 in the first embodiment, which will not be repeated here.

### Sixth embodiment

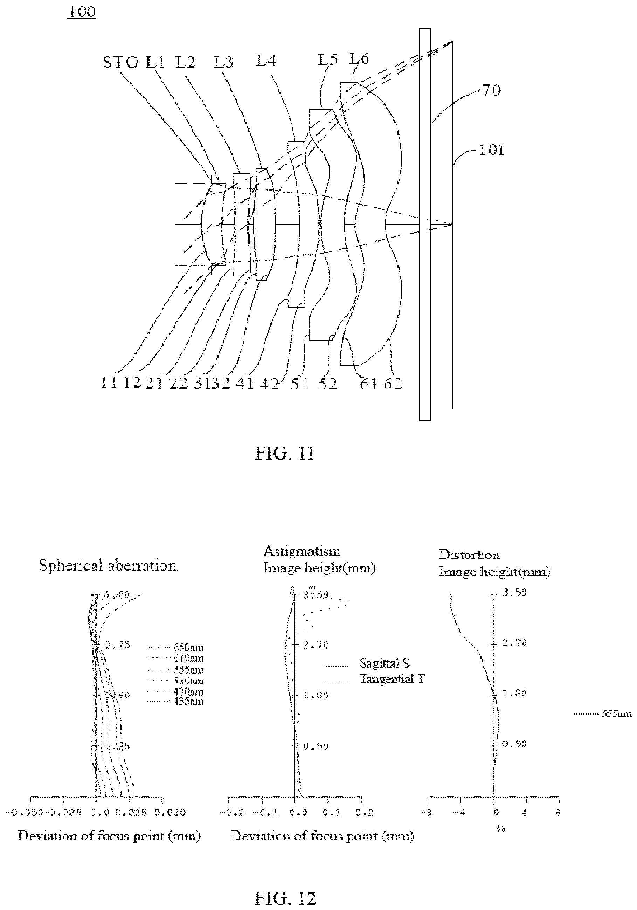

As shown in FIG. 11, in the refractive power of the first lens L1 to the sixth lens L6 in this embodiment, except for fifth lens L5 that has negative refractive power and the sixth lens L6 that has positive refractive power, the refractive power of other lenses is the same as that of the first embodiment. In the first lens L1 to the sixth lens L6, except for the fourth lens L4 that has a concave image side surface 42, the surface shapes of the other lenses are the same as those of the first embodiment.

The parameters of the optical system 100 are shown in Table 11. The definitions of each parameter are referred to the description of the previous embodiments, which will not be repeated here. Table 12 shows the high-order coefficients that can be applied for each aspherical lens in the sixth embodiment. The high-order coefficients A4, A6, A8, A10, A12, A14, A16, A18, and A20 are for the surface numerals 1-12. The surface numerals 7-12 also provide high-order coefficients A22, A24, A26, A28, A30.

**Table 11**

| Sixth embodiment | | | | | | | | |
|---|---|---|---|---|---|---|---|---|
| f=3.450mm, FNO=2.08, FOV=95.000deg, TTL=4.676mm | | | | | | | | |
| Surface numeral | Surface name | Surface type | Y-Radius | Thickne ss | Materi al | Refractive index | Abbe number | Focal length |
| OBJ | Object side | sphere | infinity | 400.000 | | | | |
| STO | Stop | sphere | infinity | -0.196 | | | | |
| 1 | First lens | asphere | 1.799 | 0.389 | Plastic | 1.546 | 55.967 | 5.748 |
| 2 | | asphere | 3.896 | 0.243 | | | | |
| 3 | Second lens | asphere | 9.359 | 0.247 | Plastic | 1.678 | 19.246 | -9.090 |
| 4 | | asphere | 3.673 | 0.100 | | | | |
| 5 | Third lens | asphere | 5.328 | 0.396 | Plastic | 1.546 | 55.967 | 6.935 |
| 6 | | asphere | -12.720 | 0.456 | | | | |
| 7 | Fourth lens | asphere | -12.474 | 0.354 | Plastic | 1.546 | 55.967 | -18.104 |
| 8 | | asphere | 47.968 | 0.032 | | | | |
| 9 | Fifth lens | asphere | 2.200 | 0.444 | Plastic | 1.546 | 55.967 | -40.047 |
| 10 | | asphere | 1.857 | 0.199 | | | | |
| 11 | Sixth lens | asphere | 0.779 | 0.550 | Plastic | 1.546 | 55.967 | 6.031 |
| 12 | | asphere | 0.766 | 0.648 | | | | |
| 13 | Filter | sphere | infinity | 0.210 | Glass | 1.518 | 64.166 | |
| 14 | | sphere | infinity | 0.408 | | | | |
| IMG | Imaging surface | sphere | infinity | 0.000 | | | | |

**Table 12**

| Sixth embodiment | | | | | | |
|---|---|---|---|---|---|---|
| Surface numeral | 1 | 2 | 3 | 4 | 5 | 6 |
| K | -2.6192E+00 | 9.9255E+00 | 9.6609E+01 | -2.7690E+01 | -4.9503E+01 | -5.4410E+01 |
| A4 | 5.6234E-02 | -4.8894E-02 | -1.8368E-01 | -8.2483E-02 | 5.5221E-02 | -1.2452E-01 |
| A6 | 3.3377E-02 | -2.1571E-02 | 7.0243E-02 | 1.5535E-01 | -1.1440E+00 | 1.0613E+00 |
| A8 | -9.2805E-02 | 7.0764E-02 | -3.5683E-01 | -6.9421E-01 | 1.7881E+01 | -1.2470E+01 |
| A10 | 2.2033E-01 | -1.1394E-01 | 2.3299E+00 | 2.2720E+00 | -1.7211E+02 | 1.1223E+02 |
| A12 | -3.0986E-01 | -2.1499E-01 | -1.0015E+01 | -4.8192E+00 | 1.0802E+03 | -7.1911E+02 |
| A14 | 2.6396E-01 | 5.9043E-01 | 2.4905E+01 | 6.6570E+00 | -4.6893E+03 | 3.2088E+03 |
| A16 | -1.1720E-01 | -4.6479E-01 | -3.6396E+01 | -5.8985E+00 | 1.4506E+04 | -1.0119E+04 |
| A18 | 0.0000E+00 | 0.0000E+00 | 2.8860E+01 | 3.0261E+00 | -3.2420E+04 | 2.2837E+04 |
| A20 | 0.0000E+00 | 0.0000E+00 | -9.7356E+00 | -6.7987E-01 | 5.2416E+04 | -3.6997E+04 |
| A22 | 0.0000E+00 | 0.0000E+00 | 0.0000E+00 | 0.0000E+00 | -6.0644E+04 | 4.2639E+04 |
| A24 | 0.0000E+00 | 0.0000E+00 | 0.0000E+00 | 0.0000E+00 | 4.8887E+04 | -3.4078E+04 |
| A26 | 0.0000E+00 | 0.0000E+00 | 0.0000E+00 | 0.0000E+00 | -2.6046E+04 | 1.7924E+04 |
| A28 | 0.0000E+00 | 0.0000E+00 | 0.0000E+00 | 0.0000E+00 | 8.2352E+03 | -5.5687E+03 |
| A30 | 0.0000E+00 | 0.0000E+00 | 0.0000E+00 | 0.0000E+00 | -1.1692E+03 | 7.7246E+02 |

| Surface numeral | 7 | 8 | 9 | 10 | 11 | 12 |
|---|---|---|---|---|---|---|
| K | 2.1506E+01 | -9.6593E+01 | -6.2728E-01 | -1.0000E+00 | -3.4068E+00 | -1.0361E+00 |
| A4 | -1.0265E+00 | -4.8529E+00 | -2.9218E+00 | -2.4371E+01 | -2.5224E+01 | -5.9626E+01 |
| A6 | 6.7345E+00 | 4.9868E+01 | 6.9664E+01 | 4.8355E+02 | 1.7005E+02 | 5.3813E+02 |
| A8 | -2.2556E+01 | -4.7557E+02 | -8.5443E+02 | -5.2248E+03 | -3.4595E+02 | -3.7128E+03 |
| A10 | -4.9591E+01 | 3.0534E+03 | 6.0344E+03 | 3.5752E+04 | -4.9695E+03 | 1.7843E+04 |
| A12 | 1.1249E+03 | -1.3261E+04 | -2.9206E+04 | -1.6974E+05 | 5.2135E+04 | -5.6751E+04 |
| A14 | -7.0084E+03 | 4.0664E+04 | 1.0248E+05 | 5.8223E+05 | -2.5281E+05 | 1.0393E+05 |
| A16 | 2.5893E+04 | -9.1023E+04 | -2.6690E+05 | -1.4694E+06 | 7.6109E+05 | -2.3122E+04 |
| A18 | -6.3970E+04 | 1.5201E+05 | 5.1863E+05 | 2.7442E+06 | -1.5452E+06 | -4.4474E+05 |
| A20 | 1.0984E+05 | -1.9085E+05 | -7.4520E+05 | -3.7782E+06 | 2.1830E+06 | 1.3556E+06 |
| A22 | -1.3197E+05 | 1.7823E+05 | 7.7555E+05 | 3.7809E+06 | -2.1571E+06 | -2.1765E+06 |
| A24 | 1.0902E+05 | -1.1983E+05 | -5.6472E+05 | -2.6721E+06 | 1.4657E+06 | 2.1701E+06 |
| A26 | -5.9046E+04 | 5.4482E+04 | 2.7131E+05 | 1.2633E+06 | -6.5357E+05 | -1.3477E+06 |
| A28 | 1.8878E+04 | -1.4877E+04 | -7.6878E+04 | -3.5835E+05 | 1.7242E+05 | 4.7944E+05 |
| A30 | -2.6994E+03 | 1.8265E+03 | 9.6841E+03 | 4.6099E+04 | -2.0412E+04 | -7.4835E+04 |

From (A) longitudinal spherical aberration diagram, (B) astigmatism diagram, and (C) distortion diagram of FIG. 12, the longitudinal spherical aberration, the astigmatism, and the distortion of the optical system 100 are well controlled, thus the optical system 100 of this embodiment has good imaging quality. In addition, the wavelengths corresponding to the diagrams of (A), (B), and (C) in FIG. 12 are referred to the description of (A), (B), and (C) of FIG. 2 in the first embodiment, which will not be repeated here.

### Seventh embodiment

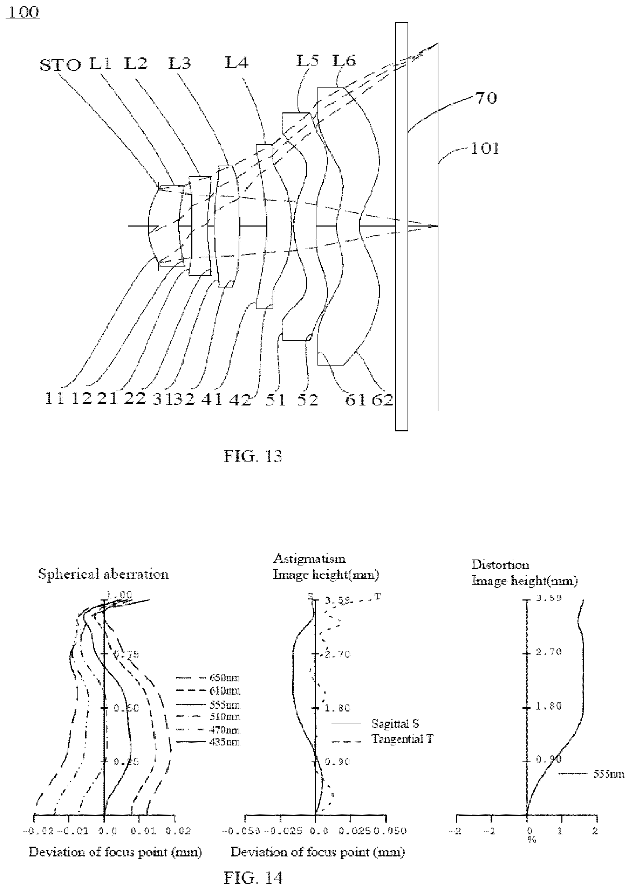

As shown in FIG. 13, in this embodiment, the refractive power of the first lens L1 to the sixth lens L6 is the same as that of the first embodiment. The surface shapes of the object side surface and image side surface of each of the first lens L1 to sixth lens L6 near the optical axis are the same as those of the first embodiment.

The parameters of the optical system 100 are shown in Table 13. The definitions of each parameter are referred to the description of the previous embodiments, which will not be repeated here. Table 14 shows the high-order coefficients that can be applied for each aspherical lens in the seventh embodiment. The high-order coefficients A4, A6, A8, A10, A12, A14, A16, A18, and A20 are for the surface numerals 1-12. The surface numerals 7-12 also provide high-order coefficients A22, A24, A26, A28, A30.

**Table 13**

| Seventh embodiment | | | | | | | | |
|---|---|---|---|---|---|---|---|---|
| f=3.510mm, FNO=2.48, FOV=89.815deg, TTL=4.650mm | | | | | | | | |
| Surface numeral | Surface name | Surface type | Y-radius | Thickne ss | Materi al | Refractive index | Abbe number | Focal length |
| OBJ | Object side | sphere | infinit y | 400.000 | | | | |
| STO | Stop | sphere | infinit y | -0.161 | | | | |
| 1 | First lens | asphere | 1.683 | 0.498 | Plastic | 1.546 | 55.967 | 5.601 |
| 2 | | asphere | 3.351 | 0.204 | | | | |
| 3 | Second lens | asphere | 8.000 | 0.255 | Plastic | 1.678 | 19.246 | -9.003 |
| 4 | | asphere | 3.416 | 0.106 | | | | |
| 5 | Third lens | asphere | 5.040 | 0.406 | Plastic | 1.546 | 55.967 | 6.791 |
| 6 | | asphere | 13.653 | 0.434 | | | | |
| 7 | Fourth lens | asphere | -3.778 | 0.396 | Plastic | 1.546 | 55.967 | -12.272 |
| 8 | | asphere | -8.975 | 0.035 | | | | |
| 9 | Fifth lens | asphere | 1.895 | 0.360 | Plastic | 1.546 | 55.967 | 3.900 |
| 10 | | asphere | 15.956 | 0.334 | | | | |
| 11 | Sixth lens | asphere | 1.056 | 0.367 | Plastic | 1.546 | 55.967 | -5.080 |
| 12 | | asphere | 0.671 | 0.570 | | | | |
| 13 | Filter | sphere | infinit y | 0.210 | Glass | 1.518 | 64.166 | |
| 14 | | sphere | infinit y | 0.476 | | | | |
| IMG | Imaging surface | sphere | infinit y | 0.000 | | | | |

**Table 14**

| Seventh embodiment | | | | | | |
|---|---|---|---|---|---|---|
| Surface numeral | 1 | 2 | 3 | 4 | 5 | 6 |
| K | -2.2285E+00 | 1.0937E+01 | -5.7170E+01 | -4.4467E+01 | -1.4260E+01 | -9.9000E+01 |
| A4 | 6.0960E-02 | -5.8524E-02 | -1.7925E-01 | -1.7026E-02 | 8.2803E-03 | 2.0504E-02 |
| A6 | 2.1422E-01 | -1.0019E-02 | 9.5375E-02 | -2.0880E-01 | -1.8300E-01 | -2.4365E-02 |
| A8 | -1.6317E+00 | 4.4595E-01 | -3.6145E-02 | 8.5582E-01 | 5.5272E-01 | -2.3278E-01 |
| A10 | 6.4579E+00 | -4.4798E+00 | -8.4835E-01 | -2.0339E+00 | -8.3879E-01 | 5.6953E-01 |
| A12 | -8.4738E+00 | 1.9496E+01 | 2.3409E+00 | 2.7529E+00 | 6.4769E-01 | -5.9256E-01 |
| A14 | -2.2034E+01 | -4.7195E+01 | -2.3751E+00 | -1.9163E+00 | -2.3562E-01 | 2.8198E-01 |
| A16 | 9.8173E+01 | 6.6081E+01 | 8.1527E-01 | 5.3526E-01 | 2.9560E-02 | -4.8625E-02 |
| A18 | -1.3628E+02 | -5.0151E+01 | 0.0000E+00 | 0.0000E+00 | 0.0000E+00 | 0.0000E+00 |
| A20 | 6.7651E+01 | 1.5881E+01 | 0.0000E+00 | 0.0000E+00 | 0.0000E+00 | 0.0000E+00 |

| Surface numeral | 7 | 8 | 9 | 10 | 11 | 12 |
|---|---|---|---|---|---|---|
| K | -9.9000E+01 | -8.6527E+01 | -7.5936E+00 | 3.7779E+01 | -4.6867E+00 | -3.0129E+00 |
| A4 | -2.7993E-01 | -5.0168E-01 | 1.1812E-01 | 3.9343E-01 | -4.1630E-01 | -3.6165E-01 |
| A6 | 1.7465E+00 | 1.2245E+00 | -1.5640E-01 | -4.4532E-01 | 2.6101E-01 | 4.3048E-01 |
| A8 | -7.7794E+00 | -3.4111E+00 | 9.7716E-03 | 2.8261E-01 | 1.0001E-01 | -4.1222E-01 |
| A10 | 2.6676E+01 | 9.5233E+00 | 5.4988E-01 | -2.8293E-01 | -4.9282E-01 | 2.9740E-01 |
| A12 | -6.8259E+01 | -2.1328E+01 | -1.9968E+00 | 3.9638E-01 | 5.8855E-01 | -1.6131E-01 |
| A14 | 1.2788E+02 | 3.5007E+01 | 3.7289E+00 | -4.0726E-01 | -3.9656E-01 | 6.6218E-02 |
| A16 | -1.7547E+02 | -4.1494E+01 | -4.3464E+00 | 2.7974E-01 | 1.7364E-01 | -2.0558E-02 |
| A18 | 1.7683E+02 | 3.5520E+01 | 3.3964E+00 | -1.3146E-01 | -5.2234E-02 | 4.7897E-03 |
| A20 | -1.3045E+02 | -2.1863E+01 | -1.8314E+00 | 4.2957E-02 | 1.1046E-02 | -8.2616E-04 |
| A22 | 6.9518E+01 | 9.5466E+00 | 6.8428E-01 | -9.7503E-03 | -1.6450E-03 | 1.0329E-04 |
| A24 | -2.6016E+01 | -2.8778E+00 | -1.7403E-01 | 1.5065E-03 | 1.6935E-04 | -9.0508E-06 |
| A26 | 6.4797E+00 | 5.6855E-01 | 2.8749E-02 | -1.5100E-04 | -1.1494E-05 | 5.2486E-07 |
| A28 | -9.6378E-01 | -6.6183E-02 | -2.7809E-03 | 8.8465E-06 | 4.6341E-07 | -1.8031E-08 |
| A30 | 6.4725E-02 | 3.4396E-03 | 1.1953E-04 | -2.2979E-07 | -8.4186E-09 | 2.7707E-10 |

From (A) longitudinal spherical aberration diagram, (B) astigmatism diagram, and (C) distortion diagram of FIG. 14, the longitudinal spherical aberration, the astigmatism, and the distortion of the optical system 100 are well controlled, thus the optical system 100 of this embodiment has good imaging quality. In addition, the wavelengths corresponding to the diagrams of (A), (B), and (C) of FIG. 14 are referred to the description of (A), (B), and (C) of FIG. 2 in the first embodiment, which will not be repeated here.

Refer to Table 15, which provides a summary of the ratios of various relationships in the first to seventh embodiments of the present application.

**Table 15**

| Relational expression | First embodim ent | Second embodimen t | Third embodime nt | Fourth embodime nt | Fifth embodim ent | Sixth embodime nt | Seventh embodimen t |
|---|---|---|---|---|---|---|---|
| f1/f | 1.601 | 1.465 | 1.289 | 1.483 | 1.632 | 1.666 | 1.596 |
| f2/f | -2.297 | -3.743 | -1.922 | -2.345 | -2.230 | -2.635 | -2.565 |
| f3/f | 1.868 | 2.028 | 1.780 | 1.926 | 1.666 | 2.010 | 1.935 |
| f4/f | -5.078 | -2.351 | -6.675 | -4.589 | -6.033 | -5.247 | -3.496 |
| \|f5\|/f | 1.212 | 1.030 | 1.238 | 1.198 | 1.138 | 11.608 | 1.111 |
| \|f6\|/f | 1.494 | 1.155 | 1.291 | 1.425 | 1.208 | 1.748 | 1.447 |
| \|f6\|/(\|f1\|+\|f2\|) | 0.383 | 0.222 | 0.402 | 0.372 | 0.313 | 0.406 | 0.348 |
| \|f456/f123\| | 4.345 | 6.304 | 13.598 | 6.693 | 6.587 | 3.700 | 5.519 |
| R1/f | 0.478 | 0.447 | 0.448 | 0.498 | 0.520 | 0.521 | 0.480 |
| R2/f5 | 0.942 | 0.921 | 1.080 | 1.169 | 1.155 | 1.129 | 0.955 |
| \|R3\|/f | 2.910 | 1.162 | 23.678 | 14.769 | 2.650 | 2.713 | 2.279 |
| R4/f | 1.004 | 0.779 | 1.380 | 1.784 | 0.951 | 1.065 | 0.973 |
| \|R5\|/f | 1.164 | 22.018 | 1.244 | 1.492 | 1.197 | 1.544 | 1.436 |
| R6/f | -7.945 | -1.057 | -4.326 | -3.476 | -3.634 | -3.687 | -3.890 |
| R7/f | -1.712 | -0.906 | -0.963 | -1.105 | -1.724 | -3.616 | -1.076 |
| \|R8\|/f | 4.580 | 3.162 | 1.355 | 2.038 | 3.721 | 13.904 | 2.557 |
| R9/f | 0.575 | 0.509 | 0.609 | 0.706 | 0.648 | 0.638 | 0.540 |
| R10\|/f | 4.133 | 4.888 | 5.803 | 8.387 | 13.712 | 0.538 | 4.546 |
| R11/f | 0.275 | 0.303 | 0.313 | 0.308 | 0.350 | 0.226 | 0.301 |
| R12/f | 0.180 | 0.185 | 0.198 | 0.195 | 0.206 | 0.222 | 0.191 |
| (R11+R12)/(R11-R12) | 4.807 | 4.126 | 4.451 | 4.478 | 3.858 | 119.319 | 4.486 |
| SD52/Yc52 | 1.768 | 1.738 | 1.707 | 1.792 | 1.752 | 1.761 | 1.776 |
| SD62/Yc62 | 2.355 | 2.482 | 2.418 | 2.257 | 2.262 | 2.167 | 2.181 |
| SAG61/CT6 | 1.169 | 1.458 | 1.231 | 1.189 | 1.009 | 0.493 | 0.832 |
| TTL/ImgH | 1.295 | 1.259 | 1.292 | 1.298 | 1.343 | 1.303 | 1.295 |
| TTL/f | 1.325 | 1.257 | 1.287 | 1.331 | 1.366 | 1.355 | 1.325 |
| ImgH/f | 1.023 | 0.999 | 0.996 | 1.026 | 1.017 | 1.041 | 1.023 |
| DL/TTL | 0.736 | 0.726 | 0.726 | 0.731 | 0.738 | 0.729 | 0.730 |
| (CT1+CT2+CT3)/(C T4+CT5+CT6) | 1.090 | 1.148 | 1.219 | 0.960 | 0.857 | 0.767 | 1.033 |
| DL/(CT1+CT2+CT3 ) | 2.900 | 3.047 | 2.855 | 3.052 | 3.214 | 3.301 | 2.928 |
| CT1/CT2 | 1.930 | 1.778 | 2.214 | 2.020 | 1.549 | 1.573 | 1.954 |
| CT4/CT3 | 0.970 | 0.592 | 0.957 | 0.873 | 1.075 | 0.892 | 0.975 |
| CT5/CT4 | 0.839 | 1.468 | 1.008 | 1.366 | 0.974 | 1.255 | 0.908 |
| CT5/CT6 | 1.009 | 1.271 | 1.269 | 1.350 | 1.334 | 0.807 | 0.982 |
| CT4/ET4 | 1.455 | 0.982 | 1.176 | 1.558 | 1.159 | 1.152 | 1.444 |
| CT6/ET6 | 0.802 | 0.751 | 0.703 | 0.474 | 0.560 | 1.267 | 0.874 |
| CT1/AT12 | 2.379 | 1.600 | 2.946 | 2.585 | 1.657 | 1.605 | 2.448 |
| CT1/AT34 | 1.132 | 0.978 | 1.029 | 0.925 | 0.837 | 0.854 | 1.148 |
| CT1/AT56 | 1.340 | 1.062 | 1.891 | 1.638 | 1.419 | 1.952 | 1.494 |
| f123/f | 1.421 | 1.179 | 1.251 | 1.345 | 1.358 | 1.437 | 1.376 |
| \|f456\|/f | 6.174 | 7.430 | 17.013 | 9.000 | 8.947 | 5.318 | 7.593 |

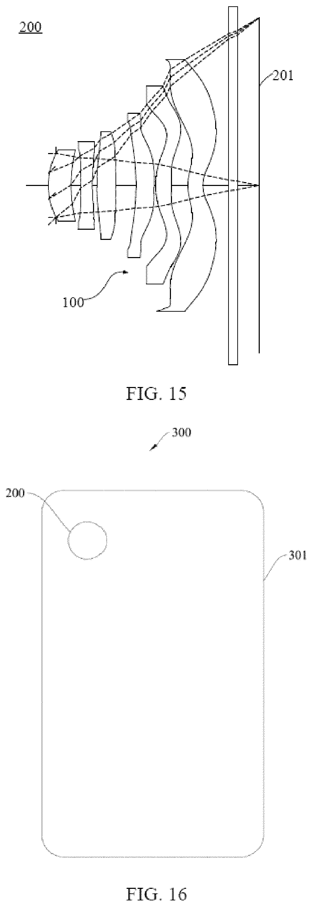

Referring to FIG. 15, the present application further provides a camera module 200. The camera module 200 includes an image sensor 201 and an optical system 100 as described in any one of the first to seventh embodiments of the first aspect. The image sensor 201 is located at the image side of the optical system 100. A photosensitive surface of the image sensor 201 is located at the imaging plane of the optical system 100. The light beams incident on the photosensitive surface through the lenses may be converted into electrical signals of the images. The image sensor 201 may be a complementary metal oxide semiconductor (CMOS) or a charge coupled device (CCD). The camera module 200 may be an imaging module integrated into an electronic device 300 or an independent lens. By incorporating the optical system 100 of the present application into the camera module 200, the surface shape and refractive power of each lens of the optical system 100 are reasonably controlled, such that the camera module 200 may meet the requirements of wide-angle capturing and miniaturization, and have improved imaging quality.

Referring to FIG. 16, the present application further provides an electronic device 300. The electronic device 300 includes a housing 301 and the camera module 200 mentioned above. The camera module 200 is located on the housing 301. The camera module 200 may be installed in or on the housing 301. The electronic device 300 may be, but is not limited to a mobile phone, a tablet computer, a laptop, a smartwatch, or a monitor. The electronic device 300 with the camera module 200 may have the advantages of the optical system 100. That is, the electronic device 300 may both achieve miniaturization and wide-angle function. The advantages have been described in the embodiments of the optical system 100, which will not be repeated here.

The above embodiments are only for describing but not intended to limit the present disclosure. Although the embodiments of the present disclosure have been described, those having ordinary skill in the art can understand that changes may be made up to and including the full extent established by the broad general meaning of the terms used in the claims. It will, therefore, be appreciated that the embodiments described above may be modified within the scope of the claims.

## Claims

1. An optical system (100), consisting of six lenses with refractive power and a stop (STO), from an object side to an image side along an optical axis of the optical system, the sixth lenses sequentially comprising a first lens (L1), a second lens (L2), a third lens (L3), a fourth lens (L4), a fifth (L5), and a sixth lens (L6); the stop being located between the object side of the optical system (100) and an object side surface (11) of the first lens (L1);
the first lens has positive refractive power, the object side surface (11) of the first lens is convex near the optical axis, and an image side surface (12) of the first lens is concave near the optical axis;
the second lens has negative refractive power, and an image side surface (22) of the second lens is concave near the optical axis;
the third lens has positive refractive power, and each of an object side surface (31) and an image side surface (32) of the third lens is convex near the optical axis;
the fourth lens has negative refractive power, and an object side surface (41) of the fourth lens is concave near the optical axis;
the fifth lens has refractive power, and an object side surface (51) of the fifth lens is convex near the optical axis;
the sixth lens has refractive power, an object side surface (61) of the sixth lens is convex near the optical axis, and an image side surface (62) of the sixth lens is concave near the optical axis;
the optical system satisfies following relationships:
1.9<FNO<2.6;
85deg<FOV<100deg;
1.2<TTL/ImgH<1.4; and
1.2<TTL/f<1.4;
wherein FNO is an F-number of the optical system, FOV is a maximum field of view of the optical system, f is a focal length of the optical system, TTL is a distance from the object side surface of the first lens to an imaging plane of the optical system along the optical axis, and ImgH is an image height corresponding to half of the maximum field of view of the optical system;
and the optical system further satisfies at least one of following relationship:
1.3<CT1/AT12<4;
0.7<CT1/AT34<1.3; and
0.8<CT1/AT56<2.5;
wherein CT1 is a thickness of the first lens at the optical axis, AT12 is an air interval between the first lens and the second lens at the optical axis, AT34 is an air interval between the third lens and the fourth lens at the optical axis, and AT56 is an air interval between the fifth lens and the sixth lens at the optical axis.

2. The optical system according to claim 1, **characterized in that**, the optical system further satisfies at least one of following relationships:
1<f1/f<2;
-5<f2/f<-1.3;
1.3<f3/f<2.4;
f4/f<-1.5;
1<| f5 |/f;
1<| f6 |/f<2.1;
0.15<| f6 |/(| f1 |+| f2 |)<0.6;
2<|f456/f123|;
0.9<f123/f<1.7; and
3<|f456|/f;
wherein f1 is a focal length of the first lens, f2 is a focal length of the second lens, f3 is a focal length of the third lens, f4 is a focal length of the fourth lens, f5 is a focal length of the fifth lens, f6 is a focal length of the sixth lens, f123 is a combined focal length of the first lens, the second lens, and the third lens, and f456 is a combined focal length of the fourth lens, the fifth lens, and the sixth lens.

3. The optical system according to claim 2, **characterized in that**, the optical system further satisfies at least one of following relationships:
1.1<f1/f<1.8;
-4<f2/f<-1.5;
1.5<f3/f<2.2;
-7<f4/f<-2;
1<| f5 |/f<12;
1<| f6 |/f<1.9;
0.2<| f6 |/(| f1 |+| f2 |)<0.5;
2.5<|f456/f1231|;
1.1<f123/f<1.5; and
5<|f456|/f.

4. The optical system according to any one of claims 1 to 3, **characterized in that**, the optical system further satisfies at least one of following relationships:
1.4<SD52/Yc52<2.1;
1.9<SD62/Yc62<2.8; and
0.3<SAG61/CT6<1.7;
wherein SD52 is a maximum effective half-aperture of an image side surface of the fifth lens, Yc52 is a vertical distance from an off-axis point of the image side surface of the fifth lens to the optical axis, SD62 is a maximum effective half-aperture of the image side surface of the sixth lens, Yc62 is a vertical distance from an off-axis point of the image side surface of the sixth lens to the optical axis, SAG61 is a distance from a maximum effective aperture of the object side surface of the sixth lens to an intersection of the object side surface of the sixth lens and the optical axis along the optical axis, and CT6 is a thickness of the sixth lens at the optical axis.

5. The optical system according to claim 4, **characterized in that**, the optical system further satisfies at least one of following relationships:
1.6<SD52/Yc52<1.9;
2.1<SD62/Yc62<2.6; and
0.4<SAG61/CT6<1.6.

6. The optical system according to any one of claims 1 to 5, **characterized in that**, the optical system further satisfies at least one of following relationships:
0.3<R1/f<0.7;
0.6<R2/f<1.5,
0.9<| R3 |/f;
0.5<R4/f<2.1;
0.9<| R5 |/f;
R6/f<-0.7;
R7/f<-0.6;
1<| R8 |/f;
0.4<R9/f<1;
0.4<| R10 |/f;
0.1<R11/f<0.5;
0.1<R12/f<0.5; and
2<(R11+R12)/(R11-R12);
wherein R1 and R2 are radii of curvature of the object side surface and the image side surface of the first lens near the optical axis, respectively, R3 and R4 are radii of curvature of an object side surface and the image side surface of the second lens near the optical axis, respectively, R5 and R6 are radii of curvature of the object side surface and the image side surface of the third lens near the optical axis, respectively, R7 and R8 are radii of curvature of the object side surface and an image side surface of the fourth lens near the optical axis, respectively, R9 and R10 are radii of curvature of the object side surface and an image side surface of the fifth lens near the optical axis, respectively, R11 and R12 are radii of curvature of the object side surface and the image side surface of the sixth lens near the optical axis, respectively.

7. The optical system according to any one of claims 1 to 6, **characterized in that**, the optical system further satisfies at least one of following relationship:
0.9<ImgH/f<1.2; and
0.68<DL/TTL<0.8;
wherein DL is a distance from the object side surface of the first lens to the image side surface of the sixth lens at the optical axis.

8. The optical system according to claim 7, **characterized in that**, the optical system further satisfies at least one of following relationship:
1<ImgH/f<1.1; and
0.7<DL/TTL<0.75.

9. The optical system according to any one of claims 1 to 8, **characterized in that**, the optical system further satisfies at least one of following relationship:
0.5<(CT1+CT2+CT3)/(CT4+CT5+CT6)<1.5;
2.5<DL/(CT1+CT2+CT3)<4;
1.3<CT1/CT2<2.5;
0.4<CT4/CT3<1.3;
0.7<CT5/CT4<1.6; and
0.65<CT5/CT6<1.5;
wherein CT2 is a thickness of the second lens at the optical axis, CT3 is a thickness of the third lens at the optical axis, CT4 is a thickness of the fourth lens at the optical axis, CT5 is a thickness of the fifth lens at the optical axis, CT6 is a thickness of the sixth lens at the optical axis, and DL is a distance from the object side surface of the first lens to the image side surface of the sixth lens at the optical axis.

10. The optical system according to claim 9, **characterized in that**, the optical system further satisfies at least one of following relationship:
0.7<(CT1+CT2+CT3)/(CT4+CT5+CT6)<1.3;
2.7<DL/(CT1+CT2+CT3)<3.6;
1.5<CT1/CT2<2.3;
0.5<CT4/CT3<1.1;
0.8<CT5/CT4<1.5; and
0.75<CT5/CT6<1.4.

11. The optical system according to any one of claims 1 to 10, **characterized in that**, the optical system further satisfies at least one of following relationships:
0.85<CT4/ET4<1.7; and
0.38<CT6/ET6<1.4;
wherein CT4 is a thickness of the fourth lens at the optical axis, CT6 is a thickness of the sixth lens at the optical axis, ET4 is a distance from a maximum effective half-aperture of the object side surface of the fourth lens to a maximum effective half-aperture of an image side surface of the fourth lens along a direction parallel to the optical axis, and ET6 is a distance from a maximum effective half-aperture of the object side surface of the sixth lens to a maximum effective half-aperture of the image side surface of the sixth lens along a direction parallel to the optical axis.

12. The optical system according to claim 1, **characterized in that**, the optical system further satisfies at least one of following relationships:
1.5<CT1/AT12<3.2;
0.8<CT1/AT34<1.2; and
0.9<CT1/AT56<2.

13. A camera module, **characterized by** comprising an image sensor and an optical system according to any one of claims 1 to 12, wherein the image sensor is located at the image side of the optical system.

14. An electronic device, **characterized by** comprising a housing and a camera module according to claim 13, wherein the camera module is located on the housing.

## Patentansprüche

1. Ein optisches System (100), bestehend aus sechs Linsen mit Brechkraft und einer Blende (STO), von einer Objektseite zu einer Bildseite entlang einer optischen Achse des optischen Systems, wobei die sechs Linsen nacheinander eine erste Linse (L1), eine zweite Linse (L2), eine dritte Linse (L3), eine vierte Linse (L4), eine fünfte Linse (L5) und eine sechste Linse (L6) umfassen;
wobei die Blende zwischen der Objektseite des optischen Systems (100) und einer objektseitigen Oberfläche (11) der ersten Linse (L1) angeordnet ist;
die erste Linse eine positive Brechkraft aufweist, die objektseitige Oberfläche (11) der ersten Linse nahe der optischen Achse konvex ist und eine bildseitige Oberfläche (12) der ersten Linse nahe der optischen Achse konkav ist;
die zweite Linse eine negative Brechkraft aufweist und eine bildseitige Oberfläche (22) der zweiten Linse nahe der optischen Achse konkav ist;
die dritte Linse eine positive Brechkraft aufweist und sowohl eine objektseitige Oberfläche (31) als auch eine bildseitige Oberfläche (32) der dritten Linse nahe der optischen Achse konvex sind;
die vierte Linse eine negative Brechkraft aufweist und eine objektseitige Oberfläche (41) der vierten Linse nahe der optischen Achse konkav ist;
die fünfte Linse eine Brechkraft aufweist und eine objektseitige Oberfläche (51) der fünften Linse nahe der optischen Achse konvex ist;
die sechste Linse eine Brechkraft aufweist, eine objektseitige Oberfläche (61) der sechsten Linse nahe der optischen Achse konvex ist und eine bildseitige Oberfläche (62) der sechsten Linse nahe der optischen Achse konkav ist;
das optische System die folgenden Beziehungen erfüllt:
1.9<FNO<2.6;
85deg<FOV<100deg;
1.2<TTL/ImgH<1. 4; and
1.2<TTL/f<1.4;
wobei FNO eine Blendenzahl des optischen Systems ist, FOV ein maximales Sichtfeld des optischen Systems ist, f eine Brennweite des optischen Systems ist, TTL ein Abstand von der objektseitigen Oberfläche der ersten Linse zu einer Bildebene des optischen Systems entlang der optischen Achse ist und ImgH eine Bildhöhe ist, die der Hälfte des maximalen Sichtfeldes des optischen Systems entspricht;
und das optische System ferner mindestens eine der folgenden Beziehungen erfüllt:
1.3<CT1/AT12<4;
0.7<CT1/AT34<1.3; and
0.8<CT1/AT56<2.5;
wobei CT1 eine Dicke der ersten Linse auf der optischen Achse ist, AT12 ein Luftabstand zwischen der ersten Linse und der zweiten Linse auf der optischen Achse ist, AT34 ein Luftabstand zwischen der dritten Linse und der vierten Linse auf der optischen Achse ist und AT56 ein Luftabstand zwischen der fünften Linse und der sechsten Linse auf der optischen Achse ist.

2. Das optische System nach Anspruch 1, **dadurch gekennzeichnet, dass** das optische System ferner mindestens eine der folgenden Beziehungen erfüllt:
1<f1/f<2;
-5<f2/f<-1.3;
1.3<f3/f<2. 4;
f4/f<-1.5;
1<| f5 |/f;
1<| f6 |/f<2.1;
0.15<| f6 |/(| f1 |+| f2 |)<0.6;
2<|f456/f123 |;
0.9<f123/f<1.7; and
3<|f456|/f;
wobei f1 eine Brennweite der ersten Linse ist, f2 eine Brennweite der zweiten Linse ist, f3 eine Brennweite der dritten Linse ist, f4 eine Brennweite der vierten Linse ist, f5 eine Brennweite der fünften Linse ist, f6 eine Brennweite der sechsten Linse ist, f123 eine kombinierte Brennweite der ersten Linse, der zweiten Linse und der dritten Linse ist und f456 eine kombinierte Brennweite der vierten Linse, der fünften Linse und der sechsten Linse ist.

3. Das optische System nach Anspruch 2, **dadurch gekennzeichnet, dass** das optische System ferner mindestens eine der folgenden Beziehungen erfüllt:
1.1<f1/f<1.8;
-4<f2/f<-1.5;
1.5<f3/f<2. 2;
-7<f4/f<-2;
1<| f5 |/f<12;
1<| f6 |/f<1.9;
0.2<| f6 |/(| f1 |+| f2 |)<0.5;
2.5<|f456/f123];
1.1<f123/f<1.5; and
5<|f456|/f.

4. Das optische System nach einem der Ansprüche 1 bis 3, **dadurch gekennzeichnet, dass** das optische System ferner mindestens eine der folgenden Beziehungen erfüllt:
1.4<SD52/Yc52<2.1;
1.9<SD62/Yc62<2.8; and
0.3<SAG61/CT6<1.7;
wobei SD52 eine maximale effektive Halbabertur einer bildseitigen Oberfläche der fünften Linse ist, Yc52 ein vertikaler Abstand von einem außeraxialen Punkt der bildseitigen Oberfläche der fünften Linse zur optischen Achse ist, SD62 eine maximale effektive Halbabertur der bildseitigen Oberfläche der sechsten Linse ist, Yc62 ein vertikaler Abstand von einem außeraxialen Punkt der bildseitigen Oberfläche der sechsten Linse zur optischen Achse ist, SAG61 ein Abstand von einer maximalen effektiven Apertur der objektseitigen Oberfläche der sechsten Linse zu einem Schnittpunkt der objektseitigen Oberfläche der sechsten Linse und der optischen Achse entlang der optischen Achse ist und CT6 eine Dicke der sechsten Linse auf der optischen Achse ist.

5. Das optische System nach Anspruch 4, **dadurch gekennzeichnet, dass** das optische System ferner mindestens eine der folgenden Beziehungen erfüllt:
1.6<SD52/Yc52<1.9;
2.1<SD62/Yc62<2.6; and
0.4<SAG61/CT6<1.6.

6. Das optische System nach einem der Ansprüche 1 bis 5, **dadurch gekennzeichnet, dass** das optische System ferner mindestens eine der folgenden Beziehungen erfüllt:
0.3<R1/f<0. 7;
0.6<R2/f<1.5,
0.9<| R3 |/f;
0.5<R4/f<2. 1;
0.9<| R5 |/f;
R6/f<-0.7;
R7/f<-0.6;
1<| R8 |/f;
0.4<R9/f<1;
0.4<| R10 |/f;
0.1<R11/f<0.5;
0.1<R12/f<0.5; and
2<(R11+R12)/(R11-R12);
wobei R1 und R2 Krümmungsradien der objektseitigen Oberfläche bzw. der bildseitigen Oberfläche der ersten Linse nahe der optischen Achse sind, R3 und R4 Krümmungsradien einer objektseitigen Oberfläche bzw. der bildseitigen Oberfläche der zweiten Linse nahe der optischen Achse sind, R5 und R6 Krümmungsradien der objektseitigen Oberfläche bzw. der bildseitigen Oberfläche der dritten Linse nahe der optischen Achse sind, R7 und R8 Krümmungsradien der objektseitigen Oberfläche bzw. einer bildseitigen Oberfläche der vierten Linse nahe der optischen Achse sind, R9 und R10 Krümmungsradien der objektseitigen Oberfläche bzw. einer bildseitigen Oberfläche der fünften Linse nahe der optischen Achse sind, R11 und R12 Krümmungsradien der objektseitigen Oberfläche bzw. der bildseitigen Oberfläche der sechsten Linse nahe der optischen Achse sind.

7. Das optische System nach einem der Ansprüche 1 bis 6, **dadurch gekennzeichnet, dass** das optische System ferner mindestens eine der folgenden Beziehungen erfüllt:
0.9<ImgH/f<1.2; and
0.68<DL/TTL<0.8;
wobei DL ein Abstand von der objektseitigen Oberfläche der ersten Linse zu der bildseitigen Oberfläche der sechsten Linse auf der optischen Achse ist.

8. Das optische System nach Anspruch 7, **dadurch gekennzeichnet, dass** das optische System ferner mindestens eine der folgenden Beziehungen erfüllt:
1<ImgH/f<1. 1; and
0.7<DL/TTL<0.75.

9. Das optische System nach einem der Ansprüche 1 bis 8, **dadurch gekennzeichnet, dass** das optische System ferner mindestens eine der folgenden Beziehungen erfüllt:
0.5<(CT 1+CT2+CT3)(CT4+CT5+CT6)<1.5;
2.5<DL/(CT 1+CT2+CT3)<4;
1.3<CT1/CT2<2.5;
0.4<CT4/CT3 <1.3;
0.7<CT5/CT4<1.6; and
0.65<CT5/CT6<1.5;
wobei CT2 eine Dicke der zweiten Linse auf der optischen Achse ist, CT3 eine Dicke der dritten Linse auf der optischen Achse ist, CT4 eine Dicke der vierten Linse auf der optischen Achse ist, CT5 eine Dicke der fünften Linse auf der optischen Achse ist, CT6 eine Dicke der sechsten Linse auf der optischen Achse ist und DL ein Abstand von der objektseitigen Oberfläche der ersten Linse zu der bildseitigen Oberfläche der sechsten Linse auf der optischen Achse ist.

10. Das optische System nach Anspruch 9, **dadurch gekennzeichnet, dass** das optische System ferner mindestens eine der folgenden Beziehungen erfüllt:
0.7<(CT1+CT2+CT3)/(CT4+CT5+CT6)<1.3;
2.7<DL/(CT 1+CT2+CT3)<3.6;
1.5<CT1/CT2<2.3;
0.5<CT4/CT3 <1. 1;
0.8<CT5/CT4<1.5; and
0.75<CT5/CT6<1.4.

11. Das optische System nach einem der Ansprüche 1 bis 10, **dadurch gekennzeichnet, dass** das optische System ferner mindestens eine der folgenden Beziehungen erfüllt:
0.85<CT4/ET4<1. 7; and
0.38<CT6/ET6<1.4;
wobei CT4 eine Dicke der vierten Linse auf der optischen Achse ist, CT6 eine Dicke der sechsten Linse auf der optischen Achse ist, ET4 ein Abstand von einer maximalen effektiven Halbabertur der objektseitigen Oberfläche der vierten Linse zu einer maximalen effektiven Halbabertur einer bildseitigen Oberfläche der vierten Linse entlang einer parallel zur optischen Achse verlaufenden Richtung ist und ET6 ein Abstand von einer maximalen effektiven Halbabertur der objektseitigen Oberfläche der sechsten Linse zu einer maximalen effektiven Halbabertur der bildseitigen Oberfläche der sechsten Linse entlang einer parallel zur optischen Achse verlaufenden Richtung ist.

12. Das optische System nach Anspruch 1, **dadurch gekennzeichnet, dass** das optische System ferner mindestens eine der folgenden Beziehungen erfüllt:
1.5<CT1/AT12<3.2;
0.8<CT1/AT34<1.2; and
0.9<CT1/AT56<2.

13. Ein Kameramodul, **dadurch gekennzeichnet, dass** es einen Bildsensor und ein optisches System nach einem der Ansprüche 1 bis 12 umfasst, wobei der Bildsensor auf der Bildseite des optischen Systems angeordnet ist.

14. Eine elektronische Vorrichtung, **dadurch gekennzeichnet, dass** sie ein Gehäuse und ein Kameramodul nach Anspruch 13 umfasst, wobei das Kameramodul am Gehäuse angeordnet ist.

## Revendications

1. Un système optique (100), constitué de six lentilles dotées d'une puissance de réfraction et d'un diaphragme (STO), d'un côté objet vers un côté image le long d'un axe optique du système optique, les six lentilles comprenant séquentiellement une première lentille (L1), une deuxième lentille (L2), une troisième lentille (L3), une quatrième lentille (L4), une cinquième lentille (L5) et une sixième lentille (L6);
le diaphragme étant situé entre le côté objet du système optique (100) et une surface côté objet (11) de la première lentille (L1);
la première lentille présente une puissance de réfraction positive, la surface côté objet (11) de la première lentille est convexe près de l'axe optique, et une surface côté image (12) de la première lentille est concave près de l'axe optique;
la deuxième lentille présente une puissance de réfraction négative, et une surface côté image (22) de la deuxième lentille est concave près de l'axe optique;
la troisième lentille présente une puissance de réfraction positive, et chacune parmi une surface côté objet (31) et une surface côté image (32) de la troisième lentille est convexe près de l'axe optique;
la quatrième lentille présente une puissance de réfraction négative, et une surface côté objet (41) de la quatrième lentille est concave près de l'axe optique;
la cinquième lentille présente une puissance de réfraction, et une surface côté objet (51) de la cinquième lentille est convexe près de l'axe optique;
la sixième lentille présente une puissance de réfraction, une surface côté objet (61) de la sixième lentille est convexe près de l'axe optique, et une surface côté image (62) de la sixième lentille est concave près de l'axe optique;
le système optique satisfait aux relations suivantes:
1.9<FNO<2.6;
85deg<FOV<100deg;
1.2<TTL/ImgH<1. 4; and
1.2<TTL/f<1.4;
dans lequel FNO est un nombre d'ouverture du système optique, FOV est un champ de vision maximal du système optique, f est une distance focale du système optique, TTL est une distance allant de la surface côté objet de la première lentille jusqu'à un plan d'imagerie du système optique le long de l'axe optique, et ImgH est une hauteur d'image correspondant à la moitié du champ de vision maximal du système optique;
et le système optique satisfait en outre à au moins l'une des relations suivantes:
1.3<CT1/AT12<4;
0.7<CT1/AT34<1.3; and
0.8<CT1/AT56<2.5;
dans lequel CT1 est une épaisseur de la première lentille sur l'axe optique, AT12 est un intervalle d'air entre la première lentille et la deuxième lentille sur l'axe optique, AT34 est un intervalle d'air entre la troisième lentille et la quatrième lentille sur l'axe optique, et AT56 est un intervalle d'air entre la cinquième lentille et la sixième lentille sur l'axe optique.

2. Le système optique selon la revendication 1, **caractérisé en ce que** le système optique satisfait en outre à au moins l'une des relations suivantes:
1<f1/f<2;
-5<f2/f<-1.3;
1.3<f3/f<2. 4;
f4/f<-1.5;
1<| f5 [/f;
1<| f6 |/f<2.1;
0.15<| f6 |/(| f1 |+| f2 |)<0.6;
2<|f456/f123 |;
0.9<f123/f<1.7; and
3<|f456|/f;
dans lequel f1 est une distance focale de la première lentille, f2 est une distance focale de la deuxième lentille, f3 est une distance focale de la troisième lentille, f4 est une distance focale de la quatrième lentille, f5 est une distance focale de la cinquième lentille, f6 est une distance focale de la sixième lentille, f123 est une distance focale combinée de la première lentille, de la deuxième lentille et de la troisième lentille, et f456 est une distance focale combinée de la quatrième lentille, de la cinquième lentille et de la sixième lentille.

3. Le système optique selon la revendication 2, **caractérisé en ce que** le système optique satisfait en outre à au moins l'une des relations suivantes:
1.1<f1/f<1.8;
-4<f2/f<-1.5;
1.5<f3/f<2. 2;
-7<f4/f<-2;
1<| f5 |/f<12;
1<| f6 |/f<1.9;
0.2<| f6 |/(| f1 |+| f2 |)<0.5;
2.5<|f456/f123|;
1.1<f123/f<1.5; and
5<|f456|/f.

4. Le système optique selon l'une quelconque des revendications 1 à 3, **caractérisé en ce que** le système optique satisfait en outre à au moins l'une des relations suivantes:
1.4<SD52/Yc52<2.1;
1.9<SD62/Yc62<2.8; and
0.3<SAG61/CT6<1.7;
dans lequel SD52 est une demi-ouverture effective maximale d'une surface côté image de la cinquième lentille, Yc52 est une distance verticale d'un point hors axe de la surface côté image de la cinquième lentille à l'axe optique, SD62 est une demi-ouverture effective maximale de la surface côté image de la sixième lentille, Yc62 est une distance verticale d'un point hors axe de la surface côté image de la sixième lentille à l'axe optique, SAG61 est une distance d'une ouverture effective maximale de la surface côté objet de la sixième lentille à une intersection de la surface côté objet de la sixième lentille et de l'axe optique le long de l'axe optique, et CT6 est une épaisseur de la sixième lentille sur l'axe optique.

5. Le système optique selon la revendication 4, **caractérisé en ce que** le système optique satisfait en outre à au moins l'une des relations suivantes:
1.6<SD52/Yc52<1.9;
2.1<SD62/Yc62<2.6; and
0.4<SAG61/CT6<1.6.

6. Le système optique selon l'une quelconque des revendications 1 à 5, **caractérisé en ce que** le système optique satisfait en outre à au moins l'une des relations suivantes:
0.3<R1/f<0. 7;
0.6<R2/f<1.5,
0.9<| R3 |/f;
0.5<R4/f<2. 1;
0.9<| R5 |/f;
R6/f<-0.7;
R7/f<-0.6;
1<| R8 |/f;
0.4<R9/f<1;
0.4<| R10 |/f;
0.1<R11/f<0.5;
0.1<R12/f<0.5; and
2<(R11+R12)/(R11-R12);
dans lequel R1 et R2 sont des rayons de courbure de la surface côté objet et de la surface côté image de la première lentille près de l'axe optique, respectivement, R3 et R4 sont des rayons de courbure d'une surface côté objet et de la surface côté image de la deuxième lentille près de l'axe optique, respectivement, R5 et R6 sont des rayons de courbure de la surface côté objet et de la surface côté image de la troisième lentille près de l'axe optique, respectivement, R7 et R8 sont des rayons de courbure de la surface côté objet et d'une surface côté image de la quatrième lentille près de l'axe optique, respectivement, R9 et R10 sont des rayons de courbure de la surface côté objet et d'une surface côté image de la cinquième lentille près de l'axe optique, respectivement, R11 et R12 sont des rayons de courbure de la surface côté objet et de la surface côté image de la sixième lentille près de l'axe optique, respectivement.

7. Le système optique selon l'une quelconque des revendications 1 à 6, **caractérisé en ce que** le système optique satisfait en outre à au moins l'une des relations suivantes:
0.9<ImgH/f<1.2; and
0.68<DL/TTL<0.8;
dans lequel DL est une distance de la surface côté objet de la première lentille à la surface côté image de la sixième lentille sur l'axe optique.

8. Le système optique selon la revendication 7, **caractérisé en ce que** le système optique satisfait en outre à au moins l'une des relations suivantes:
1<ImgH/f<1. 1; and
0.7<DL/TTL<0.75.

9. Le système optique selon l'une quelconque des revendications 1 à 8, **caractérisé en ce que** le système optique satisfait en outre à au moins l'une des relations suivantes:
0.5<(CT 1+CT2+CT3)(CT4+CT5+CT6)<1.5;
2.5<DL/(CT 1+CT2+CT3)<4;
1.3<CT1/CT2<2.5;
0.4<CT4/CT3 <1.3;
0.7<CT5/CT4<1.6; and
0.65<CT5/CT6< 1.5;
dans lequel CT2 est une épaisseur de la deuxième lentille sur l'axe optique, CT3 est une épaisseur de la troisième lentille sur l'axe optique, CT4 est une épaisseur de la quatrième lentille sur l'axe optique, CT5 est une épaisseur de la cinquième lentille sur l'axe optique, CT6 est une épaisseur de la sixième lentille sur l'axe optique, et DL est une distance de la surface côté objet de la première lentille à la surface côté image de la sixième lentille sur l'axe optique.

10. Le système optique selon la revendication 9, **caractérisé en ce que** le système optique satisfait en outre à au moins l'une des relations suivantes:
0.7<(CT1+CT2+CT3)/(CT4+CT5+CT6)<1.3;
2.7<DL/(CT 1+CT2+CT3)<3.6;
1.5<CT1/CT2<2.3;
0.5<CT4/CT3 <1. 1;
0.8<CT5/CT4<1.5; and
0.75<CT5/CT6<1.4.

11. Le système optique selon l'une quelconque des revendications 1 à 10, **caractérisé en ce que** le système optique satisfait en outre à au moins l'une des relations suivantes:
0.85<CT4/ET4<1. 7; and
0.38<CT6/ET6<1.4;
dans lequel CT4 est une épaisseur de la quatrième lentille sur l'axe optique, CT6 est une épaisseur de la sixième lentille sur l'axe optique, ET4 est une distance d'une demi-ouverture effective maximale de la surface côté objet de la quatrième lentille à une demi-ouverture effective maximale d'une surface côté image de la quatrième lentille le long d'une direction parallèle à l'axe optique, et ET6 est une distance d'une demi-ouverture effective maximale de la surface côté objet de la sixième lentille à une demi-ouverture effective maximale de la surface côté image de la sixième lentille le long d'une direction parallèle à l'axe optique.

12. Le système optique selon la revendication 1, **caractérisé en ce que** le système optique satisfait en outre à au moins l'une des relations suivantes:
1.5<CT1/AT12<3.2;
0.8<CT1/AT34<1.2; and
0.9<CT1/AT56<2.

13. Un module de caméra, **caractérisé en ce qu'**il comprend un capteur d'image et un système optique selon l'une quelconque des revendications 1 à 12, dans lequel le capteur d'image est situé du côté image du système optique.

14. Un dispositif électronique, **caractérisé en ce qu'**il comprend un boîtier et un module de caméra selon la revendication 13, dans lequel le module de caméra est situé sur le boîtier.
